# FASCICULE DE BREVET EUROPEEN

(11) **EP 2 602 185 B1**
(45) Date de publication et mention de la délivrance du brevet: **06.04.2016**
(21) Numéro de dépôt: 12007704.5
(22) Date de dépôt: 14.11.2012
(51) Int. Cl.: B64C 27/32

(54) **Rotor pour giravion, comportant un mécanisme de butées en battement pour pales articulées sur un moyeu du rotor**
Rotor für Drehflügelflugzeug, der einen Anschlagnockenmechanismus für gelenkige Rotorblätter auf einer Rotornabe umfasst
Rotorcraft rotor, comprising a flap abutment means for blades hinged to a hub of the rotor

(30) Priorité: 07.12.2011 FR 1103738
(43) Date de publication de la demande: 12.06.2013
(73) Titulaire: Airbus Helicopters, 13725 Marignane Cedex (FR)
(72) Inventeur: Mondet, Jean, F-13330 Pelissanne (FR)
(74) Mandataire: GPI & Associés

(56) Documents cités:
- FR-A1- 2 725 687
- FR-A1- 2 742 725
- FR-A1- 2 885 115

## Description

La présente invention est du domaine des rotors à pales articulées pour les giravions équipés d'au moins un rotor principal procurant leur sustentation et leur propulsion, hélicoptères plus particulièrement. La présente invention relève plus spécifiquement des mécanismes équipant de tels rotors, pour limiter en battement le trajet des pales d'une voilure tournante que comporte le rotor (comme on peut voir par exemple dans le document FR2885115).

La présente invention a pour objet un tel mécanisme, qui met en oeuvre des organes de butée à l'encontre d'une mobilité des pales en battement. Le mécanisme est plus particulièrement du type selon lequel les organes de butée sont manoeuvrables par des moyens de manoeuvre antagoniste entre deux positions. L'un des moyens de manoeuvre est à force centrifuge et induit un escamotage des organes de butée, tandis que l'autre moyen de manoeuvre est à rappel spontané des organes de butée en position initiale de limitation en mobilité battante des pales.

La présente invention a aussi pour objet un rotor pour giravion qui comporte une voilure tournante comprenant des pales articulées sur un moyeu du rotor, et qui est équipé d'un tel mécanisme de butées limitant le trajet en battement des pales.

Les hélicoptères sont des giravions qui sont équipés d'au moins un rotor principal qui procure la sustentation et la propulsion de l'hélicoptère. Le rotor considéré au regard de la présente invention comporte notamment une voilure tournante comprenant une pluralité de pales, qui sont individuellement articulées sur un moyeu tournant en étant radialement réparties par rapport à l'axe de rotation du moyeu. Les pales sont des éléments allongés globalement plans, qui sont portés à l'une de leurs extrémités par le moyeu transversalement à son axe de rotation. Le montage articulé des pales sur le moyeu est procuré par des organes intermédiaires de montage en mobilité individuelle des pales sur le moyeu.

Les organes de montage équipent respectivement chacune des pales à leur extrémité de mise en prise sur le moyeu, pour autoriser leur manoeuvre par un opérateur, pilote notamment. Le montage articulé des pales sur le moyeu permet au pilote de l'hélicoptère d'opérer en vol des variations collectives ou cycliques du pas des pales, pour influer sur le comportement du giravion au regard de sa sustentation et/ou de sa propulsion.

La mobilité des pales sur le moyeu autorise leur déplacement vers le haut et vers le bas. Les notions de haut et de bas sont à considérer suivant l'orientation d'extension de l'axe de rotation du rotor en position d'installation sur un hélicoptère. Lorsque le rotor est tournant à vitesse nominale, les pales sont spontanément entraînées vers le haut sous l'effet de la force centrifuge, en position de perpendicularité par rapport à l'axe de rotation du rotor. Lorsque le rotor est à l'arrêt, les pales ne subissent aucune force centrifuge et sont entraînées naturellement vers le bas sous l'effet de leur poids.

Il est nécessaire de retenir les pales à plat en situation d'arrêt du rotor, et d'éviter leur battement pour les préserver. Le battement des pales doit aussi être évité en phase de démarrage du rotor. Un tel battement des pales est susceptible d'être provoqué sous l'effet d'efforts extérieurs à l'hélicoptère, par exemple induits par grand vent ou par vent en rafales, voire encore sous l'effet de mouvements d'un navire sur lequel l'hélicoptère est embarqué.

Le rotor est donc couramment équipé d'un mécanisme de butées limitant le trajet des pales en battement sous l'effet d'efforts extérieurs à l'hélicoptère. Le mécanisme de butées comprend pour chacune des pales un organe de butée basse et un organe de butée haute, qui forment des obstacles au trajet en battement individuel des pales respectivement vers le bas et vers le haut. Les organes de butée coopèrent avec des organes d'appui correspondants que comportent les organes de montage articulé des pales sur le moyeu.

Lorsque le rotor est exploité pour procurer la sustentation et/ou la propulsion de l'hélicoptère, les organes de butée haute ne doivent pas faire obstacle à la mobilité des pales vers le haut. Une mobilité des pales doit aussi être autorisée lorsque le rotor est mis en service, pour permettre au pilote de manoeuvrer les pales afin de faire varier leur pas cyclique ou collectif. Il est donc nécessaire de prévoir des moyens d'escamotage des organes de butée haute lorsque le rotor est mis en service. Il doit cependant être pris en compte l'utilité de limiter le battement des pales pendant la phase de démarrage du rotor.

Les organes de butée haute sont aussi exploités pour l'immobilisation des pales en cas d'un éventuel repli latéral des pales, afin de faciliter le transport et/ou la mise en garage de l'hélicoptère. Le repli latéral des pales doit être autorisé sans induire une gêne conséquente pour inversement déployer rapidement les pales et mettre l'hélicoptère en service.

Le mécanisme de butées comporte en conséquence un dispositif de blocage des organes de butée haute contre les appuis correspondants que comportent les organes de montage. Les organes de butée haute sont montés mobiles sur le moyeu entre deux positions. Une première position est une position d'engagement des organes de butée haute contre les organes d'appui correspondants, pour limiter en situation d'arrêt du rotor la mobilité des pales en battement entre les organes de butée basse et les organes de butée haute qui leurs sont affectés. Une deuxième position est une position de dégagement des organes de butée haute, qui autorise une libre mobilité des pales en battement vers le haut.

Les organes de butée haute sont portés par le moyeu par l'intermédiaire de moyens de mobilité, comprenant par exemple un anneau qui est porteur de l'ensemble des organes de butée haute et qui est monté tournant sur le moyeu. Selon un autre exemple de réalisation, les organes de butée haute sont susceptibles d'être individuellement montés mobiles en pivotement sur une collerette que comporte le moyeu à sa périphérie.

Le dispositif de blocage comporte des moyens de manoeuvre antagoniste des organes de butée haute entre les deux dites positions d'engagement et de dégagement. Les moyens de manoeuvre sont susceptibles d'être en prise sur un organe de mobilité conjointe des organes de butée haute, tel que par l'intermédiaire d'un dit anneau par exemple. Dans le cas où les organes de butée haute sont individuellement montés mobiles sur le moyeu, les moyens de manoeuvre sont par exemple encore individuellement affectés à chacun des organes de butée haute.

La force centrifuge induite par la mise en rotation du rotor est avantageusement exploitée pour provoquer l'escamotage des organes de butée haute. Une telle exploitation de la force centrifuge procure notamment l'avantage d'être adaptée à un démarrage du rotor par grand vent ou par vent en rafales, à partir d'une organisation simple des moyens de manoeuvre.

A partir d'un seuil prédéterminé de mise en rotation du rotor, les organes de butée haute sont spontanément entraînés en position de dégagement. Inversement, en phase d'arrêt du rotor, la force centrifuge exploitée s'affaiblit et autorise un passage des organes de butée haute en position d'engagement. Pour éviter un battement des pales en phase terminale d'arrêt du rotor, des moyens de rappel sont exploités pour forcer le passage des organes de butée haute en position d'engagement.

Les moyens de manoeuvre comprennent en conséquence deux moyens de manoeuvres antagonistes des organes de butée haute, respectivement vers la position de dégagement et vers la position d'engagement.

Un premier moyen de manoeuvre des organes de butée haute est du type à force centrifuge, pour provoquer le passage spontané des organes de butée haute en position de dégagement sous l'effet de la force centrifuge induite par la mise en rotation du rotor. Le premier moyen de manoeuvre met typiquement en oeuvre au moins une masselotte qui est portée par un bras de levier en prise sur le moyeu et sur les organes de butée haute. La prise du bras de levier sur les organes de butée haute est susceptible d'être individuelle ou collective, selon les variantes susvisées d'organisation des dits moyens de mobilité.

Un deuxième moyen de manoeuvre des organes de butée haute est antagoniste aux efforts générés par le premier moyen de manoeuvre. Le deuxième moyen de manoeuvre est avantageusement du type à moyens tarés de rappel spontané des organes de butée haute en position d'engagement. Le deuxième moyen de manoeuvre induit un rappel spontané des organes de butée haute en position d'engagement, dès lors que la force centrifuge exploitée par le premier moyen de manoeuvre s'affaiblit au-delà d'un seuil d'effort prédéterminé. Les moyens tarés de rappel sont typiquement des moyens élastiquement déformables, tels qu'un ressort de compression, un ressort de traction, et/ou un ressort de torsion par exemple.

En phase de mise en rotation du rotor, un effort centrifuge issu de la force centrifuge exploitée par le premier moyen de manoeuvre, tend à entraîner les organes de butée haute en position de dégagement. Un effort de rappel exercé par le deuxième moyen de manoeuvre s'oppose à un passage prématuré des organes de butée haute vers la position de dégagement, tant que le dit seuil d'effort correspondant n'est pas atteint.

Inversement en phase d'arrêt du rotor, un affaiblissement de l'effort centrifuge fourni par le premier moyen de manoeuvre est induit. Un tel affaiblissement réduit la capacité du premier moyen de manoeuvre à contrer un effort de rappel généré par le deuxième moyen de manoeuvre. A partir du seuil d'effort correspondant, l'effort centrifuge affaibli par le ralentissement du rotor autorise le passage des organes de butée haute vers la position d'engagement, sous l'effet de l'effort de rappel devenu plus important que l'effort centrifuge. En l'absence d'une nouvelle mise en rotation du rotor, l'effort de rappel maintien les organes de butée haute en position d'engagement.

Pour connaître un environnement technologique proche de la présente invention, on pourra par exemple se reporter aux documents FR2885115 (EUROCOPTER FRANCE) et FR2725687 (EUROCOPTER FRANCE), qui décrivent de tels mécanismes de butées pour rotor d'un hélicoptère, procurant une limitation en battement de pales montées articulées sur un moyeu du rotor.

Il est apparu à l'usage que de tels mécanismes de butées méritent d'être améliorés, tant au regard de leur fonctionnement qu'au regard d'une préservation des pièces mécaniques du rotor.

Il est identifié une phase d'escamotage des organes de butée haute depuis leur position d'engagement vers leur position de dégagement. Cette phase d'escamotage s'étend sur une durée correspondante à une montée en régime de mise en rotation du rotor en phase de démarrage, jusqu'à la mise en position de dégagement effective des organes de butée haute. Pendant la phase d'escamotage, les pièces mécaniques en contact du mécanisme de butées sont soumises à des contraintes ou des chocs préjudiciables qui les endommagent, notamment en présence de grand vent ou de vent en rafales sollicitant les pales vers le haut.

De telles contraintes sont plus particulièrement induites lors d'une étape transitoire de la phase d'escamotage, au cours de laquelle les organes de butée haute sont mis en mobilité pour s'échapper des appuis qu'ils prennent en position d'engagement. L'étape transitoire s'étend depuis l'instant où le dégagement des organes de butée haute est initié, jusqu'à ce que ce dégagement soit effectif.

Il est souhaitable que le passage des organes de butée haute depuis la position d'engagement vers la position de dégagement soit le plus rapide possible, dès lors que leur mise en mobilité est initiée.

Le but de la présente invention est de proposer un mécanisme de butées limitant le trajet en battement des pales d'un rotor principal pour giravion. Le rotor est plus spécifiquement à pales articulées sur un moyeu du rotor, du type organisé pour équiper un hélicoptère ou giravion analogue.

Il est plus particulièrement recherché par la présente invention de proposer un tel mécanisme de butées, dont la structure est organisée pour éviter les nuisances induites par ladite étape transitoire, en préservant au mieux les pièces mécaniques du mécanisme de butées. Il est aussi recherché d'améliorer le fonctionnement du mécanisme de butées.

Il est subsidiairement recherché d'améliorer le blocage des organes de butée haute en position d'engagement lorsque le rotor est à l'arrêt. Une telle amélioration vise notamment à limiter au mieux une mobilité des pales en battement lorsque le rotor est à l'arrêt, et/ou lorsque la mise en rotation du rotor est initiée en phase de démarrage du rotor

L'amélioration recherchée de blocage des organes de butée haute en position d'engagement doit être obtenue sans faire obstacle aux modalités propres au fonctionnement du mécanisme de butées, voire en conférant au mécanisme de butées une performance de fonctionnement accrue. De telles modalités de fonctionnement relèvent notamment de la mise en mobilité des organes de butée haute de l'une à l'autre des positions d'engagement et de dégagement.

L'amélioration recherchée de blocage des organes de butée haute en position d'engagement ne doit pas affecter la recherche principale fondée sur un passage rapide des organes de butée haute en position de dégagement, dès lors que leur mise en mobilité est initiée sous l'effet de l'effort centrifuge.

L'amélioration recherchée du fonctionnement du mécanisme de butées ne doit pas induire une complexification conséquente de la structure du mécanisme de butées. Il est opportun qu'un repli latéral et inversement un déploiement rapides des pales soient autorisés. Une mise en service rapide du rotor ne doit pas être affectée par une complexification de la structure du mécanisme de butées.

Selon une démarche de la présente invention, il est observé pendant la phase transitoire deux seuils d'efforts transitoires distincts influant sur le fonctionnement du mécanisme de butées.

Il est rappelé que des moyens de rappel à déformation élastique génèrent un effort de rappel qui varie selon l'état de déformation des moyens de rappel. Une déformation importante des moyens de rappel génère un effort de rappel important et inversement.

Il est observé un premier seuil d'effort transitoire correspondant à un seuil d'effort centrifuge, à partir duquel est initié l'entraînement des organes de butée haute vers la position de dégagement, à l'encontre de l'effort de rappel que les moyens de rappel génèrent intrinsèquement à un premier seuil de déformation.

Il est observé un deuxième seuil d'effort transitoire correspondant à un effort centrifuge à partir duquel est obtenue l'échappée effective recherchée des organes de butée en position de dégagement. L'effort centrifuge généré au deuxième seuil d'effort transitoire correspond à un effort centrifuge suffisant pour s'opposer à un effort de rappel correspondant à un deuxième seuil de déformation des moyens de rappel. Le deuxième seuil de déformation des moyens de rappel est supérieur au premier seuil de déformation.

Il est encore observé que le dit deuxième seuil d'effort transitoire correspond à un seuil d'effort de rappel à partir duquel l'effort centrifuge affaibli en phase d'arrêt du rotor n'est plus apte à interdire le passage des organes de butée haute depuis la position de dégagement vers la position d'engagement.

Il est finalement constaté que la durée de la phase transitoire est dépendante de l'intervention des moyens de rappel à l'encontre du passage des organes de butée haute depuis la position d'engagement vers la position de dégagement. Une telle intervention relève de l'effort de rappel intrinsèquement généré par les moyens de rappel au premier seuil transitoire, qui fait obstacle au passage des organes de butée haute vers la position de dégagement.

A partir de ladite démarche d'observation, la présente invention propose de rompre la stricte dépendance traditionnelle des dits seuil d'effort de rappel et seuil d'effort centrifuge, par rapport à la capacité des moyens de rappel à s'opposer aux efforts centrifuges provoquant le déplacement des organes de butée haute depuis la position d'engagement vers la position de dégagement, et inversement depuis la position de dégagement vers la position d'engagement.

Il est plus particulièrement proposé par la présente invention de conserver des moyens de rappel du type à déformation élastique que comprend le deuxième moyen de manoeuvre. De tels moyens de rappel sont avantageux au regard de leur fiabilité pour entraîner les organes de butée haute vers la position d'engagement à l'encontre de l'effort centrifuge affaibli, dès lors que le seuil d'effort est atteint. De tels moyens de rappel sont aussi avantageux au regard de leur simplicité de structure, et de leurs coûts d'obtention et de montage sur le rotor qui sont compétitifs.

A partir de ce choix et en rupture avec les habitudes prises dans le domaine des giravions, la présente invention propose d'organiser le mécanisme de butées sur le fondement d'une distinction des différents effets que procurent les moyens de rappel.

Traditionnellement en phase de démarrage du rotor, un premier effet des moyens de rappel est de retenir élastiquement les organes de butée haute au premier seuil d'effort transitoire à l'encontre de leur entraînement vers la position de dégagement. Cette retenue élastique perdure tant que l'effort centrifuge généré par le premier moyen de manoeuvre est inférieur au dit deuxième seuil d'effort transitoire.

Inversement en phase d'arrêt du rotor, un deuxième effet des moyens de rappel est d'entraîner les organes de butée haute vers la position d'engagement, sous l'effet de l'effort de rappel qu'ils génèrent intrinsèquement au deuxième seuil d'effet transitoire. L'entraînement des organes de butée haute par les moyens de rappel est autorisé à la condition que l'effort centrifuge généré par le premier moyen de manoeuvre soit inférieur à un seuil d'effort de rappel préalablement défini, correspondant à l'effort de rappel intrinsèquement généré par les moyens de rappel au deuxième seuil d'effort transitoire.

Le mécanisme de butées de la présente invention est doté de moyens spécifiques de retenue des organes de butée haute de préférence au moins en position d'engagement, voire encore en position de dégagement. La spécificité des moyens de retenue est à considérer comme étant formés d'au moins un verrou bistable distinct des moyens de rappel. Un verrou d'engagement est associé aux moyens de rappel pour retenir les organes de butée haute en position d'engagement, à l'encontre de l'effort centrifuge généré par le premier moyen de manoeuvre. Inversement, un verrou de dégagement est subsidiairement associé aux moyens de rappel pour retenir les organes de butée haute en position de dégagement, à l'encontre de l'effort de rappel intrinsèquement généré par le deuxième moyen de manoeuvre.

Le ou les verrous sont des organes de maintien des organes de butée haute rigoureusement immobiles en position respectivement d'engagement et de dégagement. En position d'engagement le verrou d'engagement s'oppose à l'effort centrifuge généré par le premier moyen de manoeuvre. En position de dégagement, le verrou de dégagement s'oppose à l'effort de rappel intrinsèquement généré par le deuxième moyen de manoeuvre.

En phase de démarrage du rotor, le maintien rigoureux par le verrou d'engagement des organes de butée haute en position d'engagement, perdure tant que le seuil d'effort centrifuge n'est pas atteint par le premier moyen de manoeuvre. Inversement en phase d'arrêt du rotor, le verrou de dégagement s'oppose à l'effort de rappel généré par le deuxième moyen de manoeuvre, tant qu'un seuil d'effort de rappel déterminé n'est pas atteint. Des moyens de commande, dont la mise en oeuvre est placée sous la dépendance d'une détection de l'effort centrifuge correspondant au seuil d'effort de rappel, sont susceptibles d'être exploités pour provoquer le passage du verrou de dégagement de l'état actif vers l'état inactif.

Il est à considérer par verrou un organe bistable à deux états fonctionnels alternatifs en tout ou rien. Un premier état fonctionnel correspond à un état actif du verrou qui interdit rigoureusement une mobilité des organes de butée haute. Un deuxième état fonctionnel correspond à un état inactif du verrou qui autorise une libre mobilité des organes de butée haute par rapport au verrou.

Le passage des organes de butée haute vers la position de dégagement est dépendant de l'effort de retenue généré par le verrou d'engagement à l'état actif. La rupture de l'état actif du verrou d'engagement et son passage à l'état inactif sont placés sous la dépendance de l'effort centrifuge généré par le premier moyen de manoeuvre en correspondance avec le seuil d'effort centrifuge.

Inversement le passage des organes de butée haute vers la position d'engagement est dépendant de l'effort de retenue généré par le verrou de dégagement à l'état actif. La rupture de l'état actif du verrou de dégagement et son passage à l'état inactif sont placés sous la dépendance d'une détection de l'effort centrifuge généré par le premier moyen de manoeuvre en correspondance avec le seuil d'effort de rappel.

Le verrou d'engagement à l'état actif interdit une déformation des moyens de rappel tant que le seuil d'effort centrifuge n'est pas atteint. A l'état actif du verrou d'engagement, l'effort de rappel intrinsèquement généré par les moyens de rappels est inopérant sur la mobilité des organes de butée haute.

A l'étape transitoire, lorsque le seuil d'effort centrifuge est atteint par le premier moyen de manoeuvre, le passage du verrou d'engagement à l'état inactif autorise une rapide déformation des moyens de rappel sous l'effet de l'effort centrifuge produit par le premier moyen de manoeuvre. La rapidité de la déformation des moyens de rappel est obtenue sous l'effet d'une interdiction initiale des moyens de rappel à se déformer à l'état actif du verrou d'engagement. Ladite interdiction initiale est opérée par le verrou d'engagement, y compris notamment dans le cas où l'effort centrifuge généré par le premier moyen de manoeuvre serait suffisant en lui-même pour induire une déformation des moyens de rappel.

La dépendance de la durée de la phase transitoire en phase de démarrage du rotor est rompue au regard de la faculté de l'effort centrifuge à s'opposer progressivement à la déformation des moyens de rappel sous l'effet de la mise en rotation progressive du rotor.

Le changement d'état en tout ou rien du verrou d'engagement depuis son état actif vers son état inactif libère les organes de butée haute en mobilité et autorise leur entraînement par l'effort centrifuge qui s'accroît en phase de démarrage du rotor. Le verrou d'engagement à l'état inactif libère en mobilité les organes de butée haute, qui sont rapidement entraînés par le premier moyen de manoeuvre dont une déformation initiale est interdite par le verrou d'engagement à l'état actif.

L'entraînement rapide des organes de butée haute résulte d'un effort centrifuge exercé sur les organes de butée haute qui correspond à un seuil d'effort centrifuge supérieur au dit premier seuil de déformation des moyens de rappel. Le deuxième seuil d'effort transitoire obtenu à partir des dispositions de la présente invention est rendu supérieur à un premier seuil d'effort transitoire qui correspondrait, en l'absence de verrou, au dit premier seuil de déformation des moyens de rappel.

La durée de la phase transitoire est minimisée et l'entraînement des organes de butée haute est obtenue rapide, depuis la position d'engagement dans laquelle ils sont fermement maintenus par le verrou d'engagement vers la position de dégagement. La rapidité de l'entraînement des organes de butée haute est obtenue sous l'effet d'un effort centrifuge au seuil d'effort centrifuge qui est significativement supérieur à l'effort de rappel intrinsèquement généré par les moyens de rappel correspondant au dit premier seuil de déformation.

Il est à considérer que les dispositions visées relatives au fonctionnement du verrou d'engagement sont le cas échéant transposées par analogie au verrou de dégagement. La durée de la phase transitoire est minimisée en phase d'arrêt du rotor à partir d'un entraînement obtenu rapide des organes de butée haute depuis la position de dégagement dans laquelle les organes de butée haute sont fermement maintenus par le verrou de dégagement, vers la position d'engagement.

En l'absence de verrou de dégagement et tel que traditionnellement en phase d'arrêt du rotor, l'entraînement des organes de butée haute vers la position d'engagement est dépendant du seuil d'effort de rappel, à partir duquel l'effort centrifuge n'est plus suffisant pour s'opposer à l'effort de rappel intrinsèquement généré par les moyens de rappel sous l'effet de leur déformation induite par le passage des organes de butée haute en position de dégagement.

La rupture de l'état inactif du verrou d'engagement et son passage à l'état actif, sont placés sous la dépendance de l'entraînement des organes de butée haute par les moyens de rappel vers la position d'engagement. A l'état d'arrêt du rotor, le maintien des organes de butée haute en position d'engagement est conforté par le verrou d'engagement.

Selon les modalités de fonctionnement du mécanisme de butées à partir de l'exploitation du seul verrou d'engagement, il est rappelé que le seuil d'effort de rappel est intrinsèque aux moyens de rappel et que le seuil d'effort centrifuge doit être apte à s'opposer à l'effort de rappel généré par les moyens de rappel.

Le maintien des organes de butée haute par le verrou d'engagement perdure pendant la montée en régime d'entraînement en rotation du rotor, jusqu'à parvenir à un effort centrifuge généré par le premier moyen de manoeuvre correspondant au seuil d'effort centrifuge. Le seuil d'effort centrifuge doit correspondre au mieux au seuil idéal de vitesse d'entraînement du rotor juste suffisant pour autoriser une mobilité des pales sur le moyeu en phase de démarrage du rotor.

Le seuil d'effort centrifuge détermine l'effort de retenue généré par le verrou d'engagement à l'état actif, et correspond notamment au cumul de l'effort de rappel intrinsèquement généré par les moyens de rappel à l'initiation de la phase transitoire et de l'effort de retenue.

Un compromis doit être trouvé entre les facultés respectives des moyens de rappel et du verrou d'engagement à s'opposer à l'effort centrifuge. Ce compromis doit prendre en compte la recherche d'un seuil d'effort centrifuge le plus proche de celui correspondant au seuil idéal de vitesse d'entraînement du rotor.

Ce compromis doit éventuellement prendre en compte une autre contrainte relative à un phénomène de rebond des organes de butée haute. Le dit phénomène de rebond est susceptible d'être induit à l'étape transitoire par le passage rapide des organes de butée haute en position de dégagement.

Le développement des moyens de rappel, formés de moyens élastiquement déformables, est réputé naturellement instable. Une telle instabilité est favorisée par l'obtention d'une déformation rapide des moyens de rappel au seuil d'effort centrifuge. La déformation rapide des moyens de rappel est obtenue à partir d'un effort centrifuge significativement supérieur à l'effort de rappel intrinsèquement généré par les moyens de rappel au seuil d'effort centrifuge, et notamment à partir d'un effort centrifuge correspondant à l'effort de rappel augmenté de l'effort de retenue.

Il doit être aussi être pris en compte une organisation du verrou d'engagement dont la structure doit être la plus simple possible, pour ne pas complexifier outre mesure la structure du mécanisme de butées.

Selon une première approche, la rupture obtenue de la dépendance traditionnelle entre le seuil d'effort de rappel et le seuil d'effort centrifuge, permet de prendre en compte les diverses conditions de la raideur intrinsèque des moyens de rappels pour provoquer les passages respectifs des organes de butée haute en position d'engagement et en position de dégagement.

En phase de démarrage du rotor, les conditions du passage des organes de butée haute en position de dégagement sont liées à une limitation en battement des pales jusqu'à parvenir à un seuil suffisant de mise en rotation du rotor. Il doit être pris en compte que cette phase de démarrage est susceptible d'être opérée avec des efforts extérieurs à l'hélicoptère potentiellement importants, tel que par grand vent ou par vent en rafales.

Les conditions du passage des organes de butée haute en position d'engagement sont susceptibles d'être moins drastiques, avec pour avantage de permettre de définir un seuil d'effort de rappel minimisé. Le choix de la raideur des moyens de rappel peut être effectué selon diverses approches. Le cas échéant, ces approches peuvent être associées à une exploitation d'un dit verrou de dégagement selon le résultat à obtenir.

Selon cette première approche, le seuil d'effort de rappel est susceptible d'être significativement inférieur au seuil d'effort centrifuge. Selon cette approche, il est favorisé une réduction de la durée de la phase d'escamotage et une optimisation de l'effort de retenue. Le verrou d'engagement étant exploité pour maintenir fermement les organes de butée haute en position d'engagement à l'arrêt du rotor, les moyens de rappel peuvent être d'une puissance minimale juste suffisante pour entraîner les organes de butée haute en position d'engagement, à l'encontre d'un reliquat d'effort centrifuge potentiellement très inférieur au seuil d'effort centrifuge.

L'effort de retenue est dans ce cas potentiellement optimisé pour un seuil d'effort centrifuge juste suffisant en correspondance avec le seuil idéal de vitesse de rotation du rotor. Lorsque l'étape transitoire est initiée, l'effort de retenue est instantanément inhibé et l'effort centrifuge est apte à provoquer une déformation rapide des moyens de rappel dont la capacité à s'opposer à l'effort centrifuge est minimisée.

Selon une deuxième approche il est opportun de profiter de la présence des moyens de rappel, pour intégrer au mécanisme de butées des moyens d'amortissement. Les moyens de rappel sont susceptibles d'intégrer aisément de tels moyens d'amortissement pour s'opposer à un éventuel phénomène de rebond induit sous l'effet du passage rapide des organes de butée haute à l'étape transitoire en position de dégagement.

Selon une variante, un dit verrou de dégagement est susceptible d'être mis à profit pour intégrer les dits moyens d'amortissement.

Selon une troisième approche, il peut être pris en compte une potentielle défaillance du verrou d'engagement à passer de l'état actif à l'état inactif selon l'organisation choisie du verrou. Une défaillance du verrou d'engagement est notamment susceptible d'être envisagée dans le cas où l'effort de retenue généré par le verrou d'engagement n'est pas un effort de retenue intrinsèque au verrou. Selon cette troisième approche, les moyens de rappel sont générateurs d'un effort de rappel intrinsèque apte à s'opposer au passage des organes de butée haute en position de dégagement tant qu'un seuil d'effort centrifuge toléré n'est pas atteint en phase de démarrage du rotor. Le seuil d'effort centrifuge toléré est inférieur au seuil d'effort centrifuge correspondant au cumul de l'effort de retenue et de l'effort de rappel généré par les moyens de rappel au seuil d'effort centrifuge. Les moyens de rappel sont aptes à provoquer le passage des organes de butée haute en position d'engagement au seuil d'effort centrifuge toléré. Les moyens de rappel sont aptes à procurer un maintien satisfaisant par eux-mêmes des organes de butée haute en position d'engagement. Au regard d'une mise en oeuvre du mécanisme de butées à partir d'une exploitation du seuil d'effort centrifuge toléré en cas de défaillance du verrou d'engagement, les modalités d'exécution de la phase transitoire sont analogues à celle traditionnellement opérée.

Pour concilier les trois approches énoncées, en prenant aussi en compte une simplification de l'organisation structurelle du verrou d'engagement, il est proposé d'organiser le verrou d'engagement en moyens de type magnétique. La force d'attraction de tels moyens de type magnétique permet de tarer précisément l'effort de retenue en fonction des besoins spécifiques relatifs au compromis à définir entre les différentes approches visées.

Le verrou d'engagement du type magnétique comprend plus précisément au moins un jeu de deux organes magnétiques coopérants, qui sont respectivement portés par le moyeu du rotor et par les organes de butée haute.

Un verrou du type magnétique présente aussi l'avantage d'être facilement exploitable et implantable sur le rotor, quelles que soient les modalités d'organisation des moyens de mobilité des organes de butée haute sur le moyeu du rotor. L'organe magnétique du jeu affecté aux organes de butée haute est susceptible d'être porté indifféremment soit individuellement par chacun des organes de butée haute, soit collectivement par les organes de butée haute selon l'agencement des moyens de mobilité des organes de butée haute sur le moyeu du rotor.

Selon une forme préférée de réalisation du verrou d'engagement, les organes magnétiques coopérants sont pour l'un au moins du type à aimant permanent. Il est à considérer par aimant permanent un organe magnétique qui procure une force magnétique intrinsèque et permanente correspondante à l'effort de retenue préalablement défini au regard du seuil d'effort centrifuge.

En phase de démarrage du rotor, le passage du verrou d'engagement à l'état inactif est naturellement induit à l'étape transitoire dès lors que l'effort centrifuge correspond au seuil d'effort centrifuge. Inversement, en phase d'arrêt du rotor, le passage du verrou d'engagement à l'état actif est naturellement induit dès lors que les organes de butée haute sont entraînés par les moyens de rappel en position d'engagement.

Le verrou d'engagement, voire aussi le verrou de dégagement, sont susceptibles d'être formés d'un moyen électromagnétique à force magnétique sélectivement générée par des moyens de commande. Les passages entre l'état actif et l'état inactif du ou des verrous sont sélectivement induits par les moyens de commande, qui provoquent respectivement une activation ou une inhibition du ou des verrous. La mise en oeuvre des moyens de commande est placée sous la dépendance de moyens d'évaluation de l'effort centrifuge généré par le premier moyen de manoeuvre au regard du seuil d'effort centrifuge.

De tels moyens d'évaluation sont par exemple des moyens de détection de la montée en régime de la mise en rotation du rotor et/ou des moyens dynamométriques de mesure de la vitesse de rotation du rotor.

Le ou les verrous sont alimentés en énergie à partir d'une source distante, réseau de bord du giravion notamment, au moyen notamment d'un collecteur électrique tournant monté sur le moyeu du rotor.

La puissance intrinsèque du verrou d'engagement de type électromagnétique est susceptible d'être quelconque dès lors que cette puissance est apte à développer au moins l'effort de retenue. La puissance intrinsèque du verrou d'engagement est susceptible d'être supérieure à celle nécessaire au seuil d'effort centrifuge, la limitation de l'effort de retenue en correspondance avec le seuil d'effort centrifuge étant procurée à partir de l'inhibition des moyens de retenue par les moyens de commande, selon l'effort centrifuge déterminé par les moyens d'évaluation.

Une puissance intrinsèque du verrou d'engagement supérieure à celle juste nécessaire au seuil d'effort centrifuge est avantageusement exploitée pour conforter le maintien des organes de butée haute en position d'engagement en situation d'arrêt du rotor.

Tel que précédemment visé, une libération rapide des moyens de rappel à l'étape transitoire induit des oscillations des moyens de rappel induits par leur instabilité à se déformer. La libération rapide des moyens de rappel est susceptible de générer un phénomène inopportun de rebond des organes de butée haute qu'il est souhaitable d'éviter.

Une solution proposée est de doter le mécanisme de butées de moyens d'amortissement du déplacement des organes de butée haute vers la position de dégagement. Diverses variantes de réalisation des moyens d'amortissement sont proposées, isolément ou en combinaison.

Selon une variante, les moyens d'amortissement sont intégrés aux moyens de rappel.

Selon une autre variante, les moyens d'amortissement sont formés par des organes amortisseurs, tels que formés d'éléments souples placés sur un trajet correspondant au déplacement des organes de butée haute vers la position de dégagement. Un tel trajet est par exemple le trajet parcouru par l'un au moins des organes de butée haute, ou le cas échéant par analogie le trajet parcouru par un anneau conjointement porteur des organes de butée haute.

Selon une autre variante, le verrou de dégagement est susceptible d'être mis à profit pour être équipé de tels moyens d'amortissement.

Selon une définition générale du mécanisme de butées de la présente invention, le mécanisme de butées est agencé pour équiper un rotor de giravion, hélicoptère plus particulièrement. Le rotor comporte une voilure tournante comprenant une pluralité de pales. Les pales sont individuellement articulées sur un moyeu du rotor par l'intermédiaire d'organes de montage respectifs, pour autoriser une variation de pas cyclique ou collectif des pales. Le rotor est notamment un rotor principal d'un hélicoptère.

Au regard de la présente invention, les modalités d'organisation propres à l'organe de montage des pales sur le moyeu procurant leur mobilité, et propres aux moyens de manoeuvre des pales procurant une variation de leur pas, sont indifférentes. La présente invention porte sur l'agencement du mécanisme de butées limitant la mobilité en battement des pales, qui est apte à équiper un rotor d'hélicoptère quel que soit l'agencement des modalités de montage articulé et de manoeuvre des pales sur le moyeu.

Le mécanisme de butées comprend des organes de butée qui sont montés sur le moyeu. Les organes de butée coopèrent avec des organes d'appui portés par le moyeu, ou par analogie par les organes de montage dont il est porteur. Les organes de butées comprennent des organes de butée basse et des organes de butée haute, entre lesquels le trajet en battement individuel d'une pale qui leur est affectée est limité.

Les modalités d'organisation propre des organes de butée basse sont indifférentes au regard de la présente invention, dont l'objet relève plus particulièrement des modalités de manoeuvre des organes de butée haute entre une position d'engagement et une position de dégagement.

Les organes de butée haute sont montés mobiles sur le moyeu entre la position d'engagement et la position de dégagement. En position d'engagement, les organes de butée haute coopèrent avec les organes d'appui correspondants, en faisant obstacle au trajet en battement des pales vers le haut. En position de dégagement, les organes de butée haute sont escamotés en laissant libre le trajet des pales en battement vers le haut.

Le mécanisme de butées comprend des moyens de manoeuvre des organes de butée haute entre la position d'engagement et la position de dégagement. Les moyens de manoeuvre comprennent un premier moyen de manoeuvre et un deuxième moyen de manoeuvre, qui développent des efforts antagonistes provoquant le passage des organes de butée haute respectivement vers la position de dégagement pour le premier moyen de manoeuvre et vers la position d'engagement pour le deuxième moyen de manoeuvre.

Le premier moyen de manoeuvre exploite une force centrifuge qui est induite par une mise en rotation du rotor. Ladite force centrifuge génère un effort centrifuge qui provoque le passage des organes de butée haute vers la position de dégagement à partir d'un seuil d'effort centrifuge prédéterminé.

Selon un exemple courant de réalisation, le premier moyen de manoeuvre comporte au moins un bras de levier qui est en prise sur les organes de butée haute et qui est muni d'une masselotte ou organe analogue exploitant la force centrifuge générée par la mise en rotation du rotor, et plus particulièrement du moyeu.

Selon une forme de réalisation, les organes de butée haute sont chacun en prise sur un bras de manoeuvre qui leur est affecté.

Selon une autre forme de réalisation les organes de butée haute sont conjointement portés par un anneau monté tournant sur le moyeu.

Le deuxième moyen de manoeuvre comprend des moyens de rappel, tel que typiquement du type à déformation élastique ou moyens analogues. Les moyens de rappel génèrent un effort de rappel spontané des organes de butée haute vers la position d'engagement à l'encontre de l'effort centrifuge généré par le premier moyen de manoeuvre. Les moyens de rappel sont des moyens aptes à provoquer le passage des organes de butée haute vers la position d'engagement, à partir d'un seuil d'effort de rappel prédéterminé qui correspond à un affaiblissement prédéterminé de l'effort centrifuge généré par le premier moyen de manoeuvre. Le seuil d'effort de rappel est notamment prédéterminé à partir de la structure intrinsèque des moyens de rappel choisis selon les besoins.

Selon la présente invention, le mécanisme de butées comprend au moins un verrou bistable qui est en tout ou rien sélectivement en prise sur les organes de butée haute entre un état actif et un état inactif. Une première position stable du verrou correspond à un état actif du verrou dans lequel le verrou est en prise sur les organes de butée haute qu'il maintient bloqués, en position d'engagement pour un verrou d'engagement et le cas échéant en position de dégagement pour un verrou de dégagement subsidiaire. Une deuxième position stable du verrou, indifféremment verrou d'engagement ou verrou de dégagement, correspond à un état inactif du verrou dans lequel ladite prise est rompue, en autorisant une indépendance de mobilité des organes de butée haute vis-à-vis du verrou, indifféremment verrou d'engagement ou verrou de dégagement.

Le verrou au moins que comprend le mécanisme de butées est un organe fonctionnel du mécanisme de butées, propre à interdire ou inversement à autoriser une mobilité en tout ou rien des organes de butée haute sous l'effet des efforts générés respectivement par le premier moyen de manoeuvre et par le deuxième moyen de manoeuvre.

La fonction du verrou est, à partir de deux positions stables respectivement à l'état actif et à l'état inactif, sélectivement soit de procurer à l'état actif un blocage des organes de butée haute respectivement en position d'engagement pour un verrou d'engagement et en position de dégagement pour un verrou de dégagement, soit inversement de procurer à l'état inactif une liberté de mobilité des organes de butée haute vers la position de dégagement pour le verrou d'engagement et vers la position d'engagement pour le verrou de dégagement.

Le verrou d'engagement à l'état actif est un organe de retenue des organes de butée haute en position d'engagement à l'arrêt du rotor et en phase de démarrage du rotor. A l'état actif, le verrou d'engagement est en prise sur les organes de butée haute induisant leur jonction l'un aux autres. La mise en position des organes de butée haute en position d'engagement à l'issue de la phase d'arrêt du rotor, induit le passage du verrou d'engagement à l'état actif par mise en prise l'un sur l'autre d'organes de verrouillage qui le composent et qui sont respectivement en prise sur le moyeu et sur les organes de butée haute. A l'état actif, le verrou d'engagement procure un maintien rigoureux des organes de butée haute bloqués contre les appuis correspondants en position d'engagement. En phase de démarrage du rotor, le verrou d'engagement à l'état actif interdit rigoureusement une mobilité des organes de butée haute à l'encontre de l'effort centrifuge généré par le premier moyen de manoeuvre.

Une mise en correspondance entre l'effort centrifuge et le seuil d'effort centrifuge induit un passage du verrou d'engagement depuis l'état actif vers l'état inactif.

Il sera déduit par analogie et transposition les modalités de fonctionnement du verrou de dégagement à partir des modalités de fonctionnement du verrou d'engagement.

Le verrou d'engagement et/ou le verrou de dégagement à l'état inactif sont en rupture de prise avec les organes de butée haute en autorisant leur libre mobilité par rapport aux verrous. Ladite rupture de prise correspond à une absence de jonction entre le ou les verrous et les organes de butée haute. En phase d'arrêt du rotor, une correspondance entre l'effort centrifuge et le seuil d'effort de rappel provoque le passage des organes de butée haute en position d'engagement et une mise en prise entre le verrou d'engagement et les organes de butée haute. Inversement en phase de démarrage du rotor et en cas d'une exploitation d'un verrou de dégagement, une correspondance entre l'effort centrifuge et le seuil d'effort centrifuge provoque le passage des organes de butée haute en position de dégagement et une mise en prise entre le verrou de dégagement et les organes de butée haute.

Plus particulièrement, le seuil d'effort centrifuge et le seuil d'effort de rappel sont à considérer comme étant des seuils distincts préalablement définis, notamment au regard d'une rupture de dépendance entre le seuil d'effort de rappel et le seuil d'effort centrifuge. Le seuil d'effort centrifuge est significativement supérieur à l'effort de rappel intrinsèquement généré par les moyens de rappel à l'encontre de l'effort centrifuge généré par le premier moyen de manoeuvre au seuil d'effort centrifuge.

Inversement le cas échéant, le seuil d'effort de rappel est déterminé par l'effort de retenue généré en tout ou rien par le verrou de dégagement, à partir d'une détection par des dits moyens d'évaluation de l'effort centrifuge généré par le premier moyen de manoeuvre à un seuil d'effort de rappel librement choisi.

Le mécanisme de butées comprend plus particulièrement des moyens d'inhibition du verrou d'engagement provoquant son état inactif au seuil d'effort centrifuge atteint par l'effort centrifuge progressivement généré par le premier moyen de manoeuvre.

Les moyens d'inhibition du verrou d'engagement sont notamment formés indifféremment par le premier moyen de manoeuvre, ou par analogie par des moyens d'évaluation de l'effort centrifuge généré par le premier moyen de manoeuvre.

En phase de démarrage du rotor, l'effort centrifuge s'amplifie jusqu'à atteindre le seuil d'effort centrifuge avec pour effet d'induire une inhibition du verrou d'engagement et son passage de l'état actif à l'état inactif. Selon une variante, l'inhibition du verrou d'engagement est provoquée directement par l'effort centrifuge généré par le premier moyen de manoeuvre. Selon une autre variante analogue à la première variante, l'inhibition du verrou d'engagement est provoquée à partir de l'exploitation de moyens d'évaluation de l'effort centrifuge généré par le premier moyen de manoeuvre.

Les dits moyens d'inhibition sont susceptibles d'être aussi des moyens d'inhibition du verrou de dégagement, à partir de l'exploitation de moyens d'évaluation de l'effort centrifuge généré par le premier moyen de manoeuvre et d'une détection d'un effort centrifuge correspondant au seuil d'effort de rappel.

Le mécanisme de butées comprend encore plus particulièrement des moyens d'activation du verrou d'engagement provoquant son état actif à un effort centrifuge correspondant à un seuil d'effort de verrouillage prédéterminé qui est au plus égal au seuil d'effort de rappel.

Un affaiblissement de l'effort centrifuge est induit par le rotor en phase d'arrêt de rotation. Au seuil d'effort de rappel, un entraînement vers la position d'engagement des organes de butée haute est provoqué par le deuxième moyen de manoeuvre. Le seuil d'effort de verrouillage correspond notamment à l'effort de rappel généré par les moyens de rappel en position d'engagement des organes de butée.

En position d'engagement des organes de butée haute, le verrou d'engagement est placé à l'état actif, notamment par mise en coopération entre des organes de verrouillage coopérants composant le verrou d'engagement. De tels organes de verrouillage sont notamment en prise sur les organes de butée haute et sur le moyeu, le passage des organes de butée haute en position d'engagement provoquant une mise en coopération spontanée des organes de verrouillage entre eux.

Par exemple dans le cas de l'exploitation de moyens magnétiques à effet permanent formant le verrou d'engagement, le seuil d'effort de verrouillage est à considérer au regard d'une force centrifuge affaiblie autorisant une mise en contact entre eux des organes magnétiques permanents coopérants que comprennent de tels moyens magnétiques. Cette mise en contact correspond au passage du verrou d'engagement à l'état actif, et est autorisée sous l'effet de l'entraînement des organes de butée haute en position d'engagement par les deuxièmes moyens de manoeuvre.

Par exemple encore dans le cas d'une exploitation de moyens électromagnétiques formant le verrou d'engagement, le seuil d'effort de verrouillage est susceptible de correspondre au seuil d'effort de rappel, à partir d'une puissance magnétique adaptée générée par les moyens électromagnétiques. Une telle puissance adaptée induit une mise en coopération entre les moyens de rappel et le verrou d'engagement pour entraîner les organes de butée haute vers la position d'engagement à partir du seuil d'effort de rappel. Le passage des organes de butée haute depuis la position de dégagement vers la position d'engagement est obtenu rapide à partir de l'exploitation du verrou d'engagement pour entraîner les organes de butée haute en position d'engagement.

Le verrou de dégagement est avantageusement formé de moyens électromagnétiques, analogues à l'exemple de réalisation correspondant du verrou d'engagement.

Plus particulièrement et selon une forme avantageuse de réalisation, les moyens d'activation du verrou d'engagement sont formés par le deuxième moyen de manoeuvre. En phase d'arrêt du rotor, l'effort centrifuge s'affaiblit. L'effort centrifuge atteint le seuil d'effort de rappel, avec pour effet d'autoriser un passage des organes de butées haute en position d'engagement sous l'effet de l'effort de rappel généré par le deuxième moyen de manoeuvre. Le passage des organes de butée haute en position d'engagement induit spontanément une activation du verrou d'engagement et son passage de l'état inactif à l'état actif.

Plus particulièrement encore et selon une variante dans laquelle le verrou d'engagement est formé d'un électroaimant ou organe analogue de verrouillage à mise en oeuvre commandée, les moyens d'activation exploitent les dits moyens d'évaluation de l'effort centrifuge généré par le premier moyen de manoeuvre. Une évaluation d'un effort centrifuge généré par le premier moyen de manoeuvre inférieur ou égal au seuil d'effort de rappel induit une activation du verrou d'engagement provoquant son passage à l'état actif.

Il sera transposé par analogie au verrou de dégagement l'exploitation de moyens d'activation d'un électroaimant ou analogue formant le verrou de dégagement, dont la mise en oeuvre est placée sous la dépendance des dits moyens d'évaluation de l'effort centrifuge développé par le premier moyen de manoeuvre.

Le verrou d'engagement est notamment générateur d'un effort de retenue des organes de butée haute en position d'engagement à l'encontre de l'effort centrifuge généré par le premier moyen de manoeuvre. L'effort de retenue correspond à la valeur du seuil d'effort centrifuge diminuée de l'effort de rappel intrinsèquement généré par les moyens de rappel au seuil d'effort centrifuge.

Le seuil d'effort centrifuge correspond à l'effort de rappel intrinsèquement généré par les moyens de rappel au seuil d'effort centrifuge augmenté d'un effort de retenue d'engagement prédéterminé généré par le verrou d'engagement. Le caractère prédéterminé de l'effort de retenue généré par le verrou d'engagement est fonction d'un seuil d'effort centrifuge admis au regard d'une interdiction de mobilité de battement des pales en phase de démarrage du rotor, et au regard d'une tolérance admise de rapidité de développement des moyens de rappel au seuil d'effort centrifuge, en fonction de la raideur des moyens de rappel.

Selon une forme avantageuse de réalisation, le verrou d'engagement et le cas échéant le verrou de dégagement comprennent des moyens magnétiques. Plus spécifiquement, le verrou d'engagement comprend des premiers moyens magnétiques et le verrou de dégagement comprend des deuxièmes moyens magnétiques. Les moyens magnétiques, indifféremment premiers ou deuxièmes, associent au moins un jeu d'organes magnétiques coopérants qui sont respectivement en prise sur les organes de butée haute et sur le moyeu.

Un exemple préféré de réalisation procure une structure simplifiée et néanmoins efficace du verrou d'engagement. Selon cet exemple de réalisation, le verrou d'engagement comprend au moins un aimant développant une force magnétique permanente et intrinsèque correspondante à l'effort de retenue.

Par exemple encore, le verrou d'engagement et le cas échéant le verrou de dégagement comprend un électroaimant dont la mise en oeuvre est placée sous la dépendance de moyens de commande de son activation et inversement de son inhibition. Les moyens de commande sont en relation avec des moyens d'évaluation de l'effort centrifuge généré par le premier moyen de manoeuvre au regard du seuil d'effort centrifuge.

La puissance développée par l'électroaimant est susceptible d'être supérieure à la puissance juste suffisante pour générer l'effort de retenue, la limitation de l'effort de retenue généré par le verrou, indifféremment verrou d'engagement ou verrou de dégagement, étant procurée par l'inhibition du verrou par les moyens de commande.

Les moyens d'évaluation comprennent par exemple des moyens de mesure indifféremment de la vitesse et/ou de l'accélération d'entraînement en rotation du moyeu. De tels moyens de mesure sont par exemple formés par des moyens de détection du régime du moteur exploité pour l'entraînement en rotation du rotor et/ou par des moyens dynamométriques de mesure de la vitesse de rotation et/ou de l'accélération du rotor.

Selon une forme préférée de réalisation, le mécanisme de butées comprend des moyens d'amortissement à l'encontre d'un éventuel phénomène de rebond. Un tel phénomène de rebond est susceptible d'être induit par une instabilité des moyens de rappel en conséquence de leur déformation rapide, qui est provoquée par un passage rapide des organes de butée haute depuis la position d'engagement vers la position de dégagement.

Selon une forme de réalisation, les moyens d'amortissement sont formés par des organes amortisseurs placés sur un trajet correspondant au déplacement des organes de butée haute depuis la position d'engagement vers la position de dégagement.

Selon une autre forme de réalisation, les moyens d'amortissement sont formés à partir d'un agencement structurel des moyens de rappel. Plus particulièrement, les moyens d'amortissement sont intégrés aux moyens de rappel.

Selon une forme particulière de réalisation, le mécanisme de butées comprend au moins un verrou de dégagement bistable qui est sélectivement en prise sur les organes de butée haute entre un état actif du verrou de dégagement et un état inactif du verrou de dégagement. A l'état actif, le verrou de dégagement est en prise sur les organes de butée haute qu'il maintient bloqués en position de dégagement. A l'état inactif, ladite prise exercée par le verrou de dégagement sur les organes de butée haute est rompue en autorisant une indépendance de mobilité des organes de butée haute vis-à-vis du verrou de dégagement.

Le verrou de dégagement est susceptible d'être mis à profit pour être équipé des moyens d'amortissement.

La présente invention a aussi pour objet un rotor pour giravion comportant une voilure tournante comprenant des pales articulées sur un moyeu du rotor. Le rotor de la présente invention est principalement reconnaissable en ce qu'il est équipé d'un mécanisme de butées tel qu'il vient d'être décrit, comprenant un dit verrou, et plus particulièrement un verrou d'engagement voire encore accessoirement un verrou de dégagement.

Le rotor pour giravion de la présente invention est plus particulièrement reconnaissable en ce que les organes de butée haute que comprend le mécanisme de butées dont il est muni, sont en prise sélective en tout ou rien sur au moins un dit verrou.

Le dit verrou est plus particulièrement un verrou d'engagement. Les organes de butée haute sont en prise ferme sur le verrou d'engagement en position d'engagement des organes de butée haute. En position de dégagement, les organes de butée haute sont libérés de la prise exercée par le verrou d'engagement.

Accessoirement, un dit verrou est un verrou de dégagement. Les organes de butée haute sont en prise ferme sur le verrou de dégagement en position de dégagement des organes de butée haute. En position d'engagement, les organes de butée haute sont libérés de la prise exercée par le verrou de dégagement.

En phase de démarrage du rotor, la prise exercée par le verrou d'engagement sur les organes de butée haute perdure jusqu'à un seuil de vitesse de rotation du rotor déterminé, en correspondance avec le seuil d'effort centrifuge prédéterminé. L'effort centrifuge produit par le premier moyen de manoeuvre ayant atteint le seuil d'effort centrifuge, une inhibition du verrou d'engagement est induite. L'inhibition du verrou d'engagement provoque le passage du verrou d'engagement de l'état actif à l'état inactif, avec pour conséquence de rompre la prise exercée par le verrou d'engagement sur les organes de butée haute. La rupture de prise induit une rupture de jonction entre le verrou d'engagement et l'organe de butée haute et autorise le passage des organes de butée haute vers la position de dégagement sous l'effet de l'effort centrifuge généré par le premier moyen de manoeuvre.

Inversement en phase d'arrêt du rotor et en l'absence de verrou de dégagement, la rupture de prise entre le verrou d'engagement et les organes de butée haute perdure jusqu'à un seuil de vitesse de rotation du rotor déterminé, en correspondance avec le seuil d'effort de rappel prédéterminé. L'effort centrifuge produit par le premier moyen de manoeuvre ayant atteint le seuil d'effort de rappel, les moyens de rappel induisent le passage des organes de butée haute en position d'engagement, jusqu'à leur mise en position d'engagement provoquant une activation du verrou d'engagement. L'activation du verrou d'engagement provoque le passage du verrou d'engagement de l'état inactif à l'état actif, avec pour conséquence de mettre en prise le verrou d'engagement et les organes de butée haute entre eux.

Le verrou d'engagement étant formé d'organes magnétiques à aimantation intrinsèque et permanente, les passages du verrou d'engagement de l'un à l'autre de l'état actif et de l'état inactif sont effectués spontanément en fonction de l'effort centrifuge généré par le premier moyen de manoeuvre.

Selon une forme de réalisation, les organes de butée haute sont conjointement portés par un anneau monté coaxial et tournant sur le moyeu. Les dits moyens de manoeuvre sont chacun en prise sur l'anneau et sur le moyeu du rotor, en provoquant une mobilité tournante sélectivement antagoniste de l'anneau entre la position d'engagement et la position de dégagement des organes de butée haute. L'anneau est monté tournant coaxial sur le moyeu et est en prise sur le verrou à l'encontre de sa mobilité en rotation sur le moyeu à l'état actif du verrou. Le dit verrou est notamment le verrou d'engagement, voire aussi le cas échéant le verrou de dégagement.

L'anneau est notamment équipé de l'un des organes magnétiques d'au moins un dit jeu d'organes magnétiques que comprend le verrou. L'autre organe magnétique du dit jeu d'organes magnétiques est porté par le moyeu.

Selon une autre forme de réalisation, les organes de butée haute que comprend le mécanisme de butées sont individuellement montés mobiles sur le moyeu en basculement entre la position d'engagement et la position de dégagement. Chacun des organes de butée haute est individuellement en prise sélective sur un verrou élémentaire qui leur est affecté à l'encontre de leur mobilité en rotation sur le moyeu à l'état actif du verrou. Le dit verrou est notamment le verrou d'engagement, voire aussi le cas échéant le verrou de dégagement.

Les verrous élémentaires forment conjointement le dit verrou, ce verrou étant indifféremment un verrou d'engagement ou un verrou de dégagement. Les efforts de retenue individuellement générés par chacun des verrous élémentaires sont analogues de l'un à l'autre des verrous élémentaires. Les passages individuels des verrous élémentaires entre un état actif et un état inactif sont induits simultanément.

Chacun des organes de butée haute est notamment équipé de l'un des organes magnétiques d'un dit jeu d'organes magnétiques que comprend le verrou. L'autre organe magnétique du dit jeu d'organes magnétiques est porté par le moyeu.

Un exemple schématique de réalisation de la présente invention va être décrit en relation avec les figures des planches annexées, dans lesquelles :
- les fig.1 et fig.2 sont des illustrations respectivement en coupe axiale et en vue partielle de dessus d'un exemple de réalisation d'un rotor pour giravion équipé d'un mécanisme de butées de l'art antérieur.
- la fig.3 est une illustration d'un autre exemple de réalisation d'un rotor pour giravion équipé d'un mécanisme de butées de l'art antérieur.
- la fig.4 est un graphique illustrant schématiquement les modalités de fonctionnement d'un mécanisme de butées de l'art antérieur.
- la fig.5 est composée de deux graphiques illustrant schématiquement les modalités de fonctionnement d'un mécanisme de butées de la présente invention selon un exemple préféré de réalisation, respectivement pour le schéma (a) en phase de mise en rotation d'un rotor pour giravion, et pour le schéma (b) en phase d'arrêt de ce rotor.
- les fig.6 à fig.11 sont des illustrations schématiques d'un exemple de réalisation de moyens de manoeuvre d'un organe de butée haute que comprend un mécanisme de butées de la présente invention, l'organe de la butée haute étant représenté respectivement en position d'engagement sur les fig.6, fig.7 et fig.11, et en position de dégagement au moins partiel sur les fig.8 à fig.10.

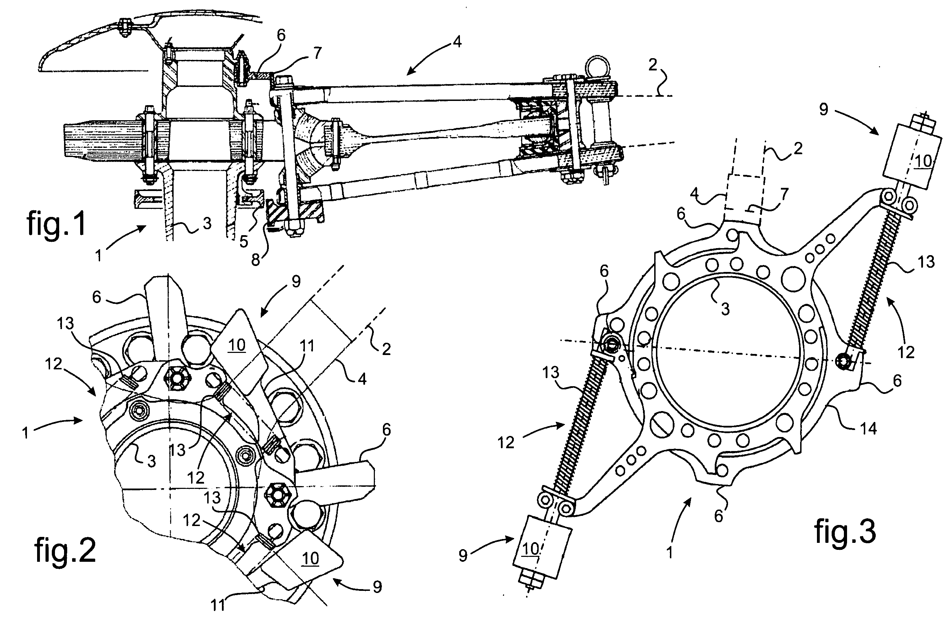

Sur les fig.1 à fig.3, un rotor 1 pour giravion comporte une voilure tournante qui comprend une pluralité de pales 2. Les pales 2 sont montées articulées sur un moyeu 3 tournant du rotor 1 par l'intermédiaire d'organes de montage 4 respectifs. Les articulations des pales 2 sur le moyeu 3 permettent à un pilote de faire varier le pas cyclique ou collectif des pales 2.

Le rotor 1 est équipé d'un mécanisme de butées pour limiter la mobilité des pales 2 en battement. Le mécanisme de butées comprend des organes de butée basse 5 et des organes de butée haute 6, qui coopèrent respectivement avec des organes d'appui 7,8 correspondants portés par les organes de montage 4.

Sur les fig.2 et fig.3, les organes de butée haute 6 sont montés escamotables sur le moyeu 3, entre une position d'engagement et une position de dégagement. En position d'engagement, les organes de butée haute 6 coopèrent avec les organes d'appui 7 correspondants pour limiter la mobilité des pales 2 en battement. En position de dégagement, les organes de butée haute 6 sont escamotés pour autoriser une mobilité des pales 2 en phase de vol du giravion. Les organes de butée haute 6 sont articulés en pivotement sur le moyeu 3 et sont en prise sur des moyens de manoeuvre antagonistes.

Un premier moyen de manoeuvre 9 exploite la force centrifuge générée par une mise en rotation du rotor 1, pour entraîner les organes de butée haute 6 en position de dégagement. Le premier moyen de manoeuvre 9 comprend un jeu de masselottes 10 qui exercent un effort centrifuge sur les organes de butée haute 6 sous l'effet d'une force centrifuge développée par le rotor mis en rotation. Les masselottes 10 sont individuellement portées par des bras de levier 11 respectifs qui sont articulés sur le moyeu 3. Un deuxième moyen de manoeuvre 12 comprend des moyens de rappel 13 des organes de butée haute 6 en position d'engagement. Les moyens de rappel 13 sont articulés sur le moyeu 3, et exercent un effort de rappel sur les organes de butée haute 6 à l'encontre de l'effort centrifuge généré par les masselottes 10.

Sur les fig.1 et fig.2, les organes de butée haute 6 sont individuellement articulés sur le moyeu 3, en étant en prise sur des moyens de manoeuvre 9,12 respectifs. Sur la fig.3, les organes de butée haute 6 sont conjointement portés par un anneau 14 monté coaxial sur le moyeu 3. L'anneau 14 est en prise sur les moyens de manoeuvre 9,12 qui provoquent son pivotement coaxial au moyeu 3, pour induire un entraînement conjoint des organes de butée haute 6 entre la position d'engagement et la position de dégagement.

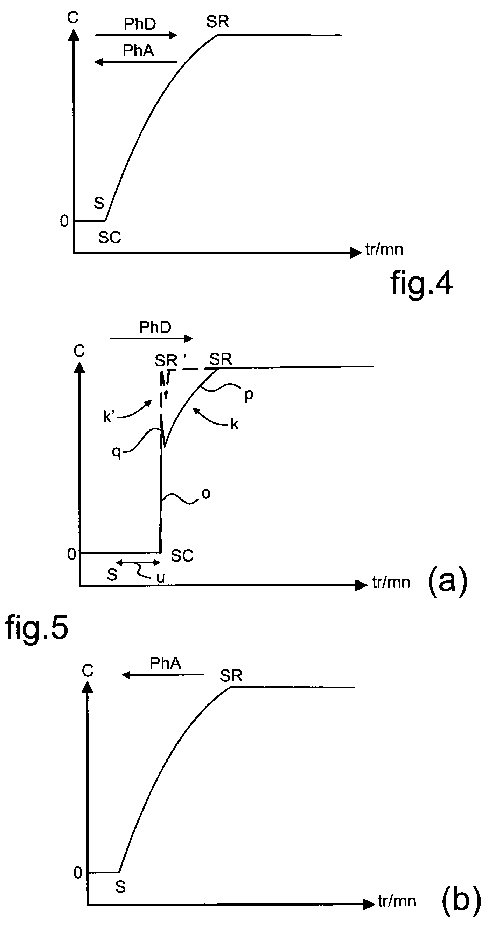

Sur les fig.4 et fig.5, des modalités de fonctionnement d'un mécanisme de butées équipant un rotor pour giravion, respectivement de l'art antérieur et de la présente invention, sont schématiquement illustrées à titre indicatif. Chacun des schémas représentés sur les figures, illustre le comportement en déformation de moyens de rappel que comprennent les mécanismes de butée haute en phase de démarrage (PhD) du rotor et en phase d'arrêt (PhA) du rotor. Les moyens de rappel sont exploités pour provoquer le passage d'organes de butée haute que comprend le mécanisme de butées, depuis une position de dégagement vers une position d'engagement.

Le comportement des moyens de rappel est illustré en fonction de la vitesse d'entraînement du rotor (tr/mn) et en fonction de l'effort centrifuge (C) généré par un premier moyen de manoeuvre du type à force centrifuge que comprennent respectivement les différents mécanismes de butées pour provoquer le passage des organes de butée haute depuis la position de dégagement vers la position d'engagement.

Sur la fig.4 et sur le schéma (a) de la fig.5, les moyens de rappel tendent à se déformer en phase de démarrage (PhD), sous l'effet de l'effort centrifuge développé à un seuil d'effort centrifuge (SC) prédéterminé. Une phase transitoire de passage des organes de butée haute depuis une position d'engagement vers une position de dégagement est initiée. Cette phase transitoire s'étend sur une durée variable selon la progression d'entraînement en rotation du rotor.

Un premier seuil d'effort transitoire correspond au seuil d'effort centrifuge (SC), à partir duquel est initié l'entraînement des organes de butée haute vers une position de dégagement. Un deuxième seuil d'effort transitoire correspond à un effort centrifuge à partir duquel est obtenue l'échappée effective recherchée des organes de butée en position de dégagement. Ce deuxième seuil d'effort transitoire correspond à un seuil d'effort de rappel (SR).

Sur la fig.4, les moyens de rappel tendent à se déformer progressivement dès que l'effort centrifuge généré par le premier moyen de manoeuvre correspond au seuil d'effort centrifuge (SC). La progression de la déformation des moyens de rappel est sensiblement constante entre deux paliers de déformation en correspondance avec le seuil d'effort centrifuge (SC) et le seuil d'effort de rappel (SR).

Sur le schéma (a) de la fig.5, un verrou de blocage des organes de butée haute en position d'engagement est exploité. Sur les exemples de réalisation de l'invention illustrée sur les figures, le mécanisme de butées est équipé d'un seul verrou, ce verrou étant un verrou d'engagement. Il est possible d'implanter en outre un verrou de dégagement exploité pour le blocage des organes de butée haute en position de dégagement. Dans ce cas, les modalités de fonctionnement d'un tel verrou de dégagement sont aisément transposables par analogie aux modalités de fonctionnement du verrou d'engagement.

Un état actif du verrou est maintenu jusqu'à une mise en correspondance entre l'effort centrifuge généré par le premier moyen de manoeuvre et le seuil d'effort centrifuge (SC). A l'état actif, le verrou interdit une déformation des moyens de rappel. Au seuil d'effort centrifuge (SC), le verrou est désactivé pour induire son passage à un état inactif. A l'état inactif, le verrou libère les organes de butée haute de leur blocage en position d'engagement.

Au seuil d'effort centrifuge (SC), les moyens de rappel se déforment brusquement sur une plage de déformation des moyens de rappel illustrée en (o). Les moyens de rappel se déforment ensuite progressivement sur une plage de déformation des moyens de rappel illustrée en (p), à partir d'un effort centrifuge déterminé selon la raideur des moyens de rappel choisie.

Sur la fig.4, pour une raideur des moyens de rappel donnée, la valeur du seuil d'effort de rappel (SR) est dépendante de la valeur du seuil d'effort centrifuge (SC).

Sur le schéma (a) de la fig.5, il est illustré respectivement sur les courbes k et k' deux variantes de déformation des moyens de rappel selon leurs raideurs respectives choisies. En comparant les courbes k et k', les valeurs respectives des seuils d'effort de rappel (SR) et (SR') diffèrent pour une raideur des moyens de rappel donnée et pour un même seuil d'effort centrifuge (SC). Une rupture de dépendance est procurée entre le seuil d'effort centrifuge (SC) et le seuil d'effort de rappel (SR, SR').

La raideur des moyens de rappel tel qu'illustré est notamment adaptée selon les différentes approches préalablement énoncées dans la description de la présente invention. Les points remarquables et différentes plages (o), (p) et (q) des courbes k et k', sont notamment à adapter selon les résultats à obtenir au regard de ces différentes approches.

Les valeurs relatives de la vitesse de rotation du rotor et de la force centrifuge à prendre en référence au regard des courbes k et k', sont à considérer selon les caractéristiques du rotor sur lequel est implanté le mécanisme de butées de la présente invention.

Sur le schéma (a) de la fig.5, il est constaté un phénomène de rebond sur une plage de déformation des moyens de rappel illustrée en (q). Ce phénomène de rebond est susceptible d'être plus ou moins important selon la raideur choisie des moyens de rappel. L'instabilité des moyens de rappel à se déformer sous l'effet de leur libération rapide par le verrou est susceptible d'induire un tel phénomène de rebond. Pour atténuer ce phénomène de rebond, la raideur des moyens de rappel est susceptible d'être mise à profit.

Sur la fig.4 et sur le schéma (b) de la fig.5, le seuil d'effort de rappel (SR) correspond à un effort centrifuge affaibli en phase d'arrêt du rotor. A partir du seuil d'effort de rappel (SR), les moyens de rappel génèrent intrinsèquement un effort de rappel apte à entraîner les organes de butée haute depuis la position de dégagement vers une position d'engagement.

La position d'engagement des organes de butée haute est obtenue à partir d'un affaiblissement de l'effort centrifuge correspondant à un seuil de repos (S) prédéterminé des efforts de rappel. Le seuil de repos (S) correspond à une station de repos des moyens de rappel, dans laquelle les organes de butée haute sont en position d'engagement. L'effort de rappel intrinsèquement généré par les moyens de rappel au seuil de repos (S) est dépendant de l'effort de maintien des organes de butée haute en position d'engagement que les moyens de rappel doivent générer.

Sur la fig.4, le comportement des moyens de rappel est inversement analogue en phase de démarrage (PhD) et en phase d'arrêt (PhA). Le seuil d'effort centrifuge correspond au seuil de repos (S). Au seuil de repos (S), l'effort de rappel généré intrinsèquement par les moyens de rappel sont nécessairement aptes à maintenir les organes de butée haute en position d'engagement.

Sur la fig.5 et en comparant entre eux le schéma (a) et le schéma (b), les comportements respectifs des moyens de rappel en phase de démarrage (PhD) et en phase d'arrêt (PhA) sont distincts. Le verrou est exploité pour le blocage des organes de butée haute en position d'engagement au seuil de repos. L'effort de rappel généré intrinsèquement par les moyens de rappel au seuil de repos (S) est susceptible d'être quelconque, sans affecter le blocage des organes de butée haute en position d'engagement.

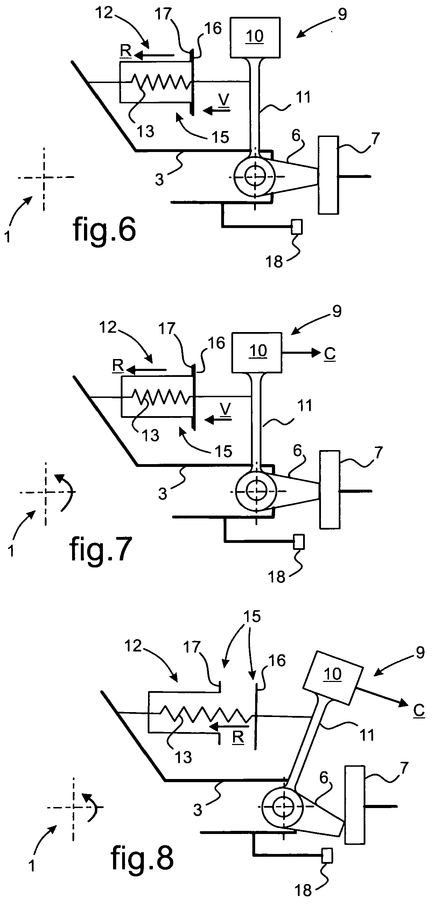

Sur les fig.6 à fig.11, des schémas illustrent, selon la présente invention, des modalités spécifiques de mise en mobilité d'un organe de butée haute articulé sur un moyeu de rotor pour giravion.

Selon un rotor tel qu'illustré sur les fig.1 à fig.3, l'organe de butée haute 6 est articulé sur le moyeu 3 et est en prise sur des moyens de manoeuvre 9,12 pour provoquer son entraînement entre la position d'engagement et la position de dégagement. L'organe de butée haute 6 est porté par un bras de levier 11 qui est équipé d'une masselotte 10 formant le premier moyen de manoeuvre 9 générateur de l'effort centrifuge. Des moyens de rappel 13 formant le deuxième moyen de manoeuvre 12 sont articulés sur le moyeu 3 et sont en prise sur le bras de levier 11, pour exercer un effort de rappel à l'encontre de l'effort centrifuge généré par la masselotte 10.

En position d'engagement, tel qu'illustré sur les fig.6, et fig.7 et fig.11, l'organe de butée haute 6 est en prise sur un organe d'appui 7. En position de dégagement, tel qu'illustré sur les fig.8 à fig.10, l'organe de butée haute 6 est libéré de l'organe d'appui 7.

Un verrou 15 bistable est interposé entre le moyeu 3 et l'organe de butée haute 6. Le verrou 15 comprend des moyens magnétiques, qui associent un jeu de deux organes magnétiques 16,17 coopérants. Les organes magnétiques 16,17 sont respectivement portés par le moyeu 3 et par l'organe de butée haute 6. Sur les représentations schématiques illustrées, un organe magnétique 16 est porté par l'organe de butée haute 6 par l'intermédiaire du bras de levier 11. D'autres modalités analogues de solidarisation entre l'organe de butée haute 6 et le verrou 15 sont susceptibles d'être exploitées.

Sur l'exemple de réalisation illustré, l'un au moins des organes magnétiques 16,17 est formé d'un aimant développant une force magnétique permanente et intrinsèque. L'autre organe magnétique 16,17 est susceptible d'être formé d'un aimant coopérant ou d'une masse métallique.

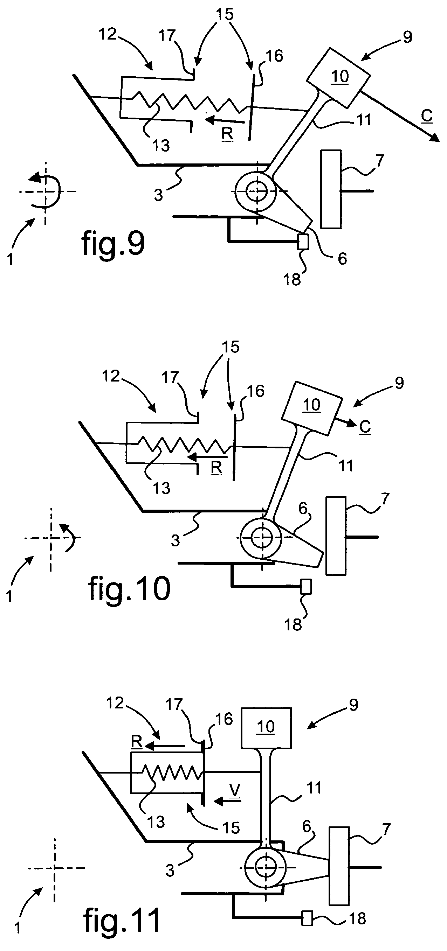

Sur les fig.6 et fig.11, le rotor 1 est à l'arrêt. Aucune force centrifuge n'étant développée par le rotor 1, la masselotte 10 n'exerce pas d'effort centrifuge sur le bras de levier 11. Les moyens de rappel 13 sont contractés en position spontanée de retenue du bras de levier 11, en développant un effort de rappel R intrinsèque. Le verrou 15 est en prise sur l'organe de butée haute 6, et développe un effort de retenue V qui maintient fermement l'organe de butée haute 6 en position d'engagement. L'état des moyens de rappel 13 est à mettre en correspondance avec le seuil de repos (S) illustré sur le schéma (b) de la fig.5.

Sur la fig.7, le rotor 1 est en phase de démarrage et sa mise en rotation est initiée. La masselotte 10 exerce un effort centrifuge C sur le bras de levier 11, qui est inférieur à un seuil d'effort centrifuge prédéterminé. L'organe de butée haute 6 est fermement maintenu en position d'engagement par le verrou 15, en étant en prise sur l'organe d'appui 7.

Les moyens de rappel 13 sont maintenus contractés, le verrou 15 en prise sur l'organe de butée haute 6 faisant obstacle au développement des moyens de rappel 13. Les moyens de rappel 13 exercent sur l'organe de butée haute un effort de rappel R qui est cumulé à l'effort de retenue V généré par le verrou 15, pour faire obstacle au passage de l'organe de butée haute 6 vers la position de dégagement.

L'état des moyens de rappel 13 est à mettre en correspondance avec la plage (u) illustrée sur le schéma (a) de la fig.5. La plage (u) est une illustration de l'état des moyens de rappel 13 selon une amplification de l'effort centrifuge exercé sur les organes de butée haute par le premier moyen de manoeuvre, entre le seuil de repos (S) et le seuil d'effort centrifuge (SC).

Sur la fig.8, le rotor 1 est à une vitesse de rotation correspondante à un seuil de mise en rotation du rotor 1 prédéterminé, à partir duquel l'organe de butée haute 6 doit être manoeuvre en position de dégagement. L'effort centrifuge C généré par la masselotte 10 correspond au seuil d'effort centrifuge, équivalent au cumul de l'effort de rappel R et de l'effort de retenue V. L'entraînement de l'organe de butée haute 6 depuis la position d'engagement vers la position de dégagement est initié en une phase transitoire.

La coopération des organes magnétiques 16,17 entre eux est rompue, avec pour effet d'induire une rupture instantanée de la prise exercée par le verrou 15 sur l'organe de butée haute 6. Le verrou 15 libère brusquement l'organe de butée haute 6 vers la position de dégagement. L'effort de rappel R étant significativement inférieur à la force centrifuge C d'une différence de l'ordre de l'effort de retenue V intrinsèque au verrou 15, les moyens de rappel 13 se développent rapidement. La durée de la phase transitoire est limitée au mieux, selon un compromis choisi relatif à la différence entre l'effort de rappel R et le seuil d'effort centrifuge.

En se reportant sur le schéma (a) de la fig.5, l'état des moyens de rappel 13 est à mettre en correspondance avec les plages (o) et (q). Pour atténuer le phénomène de rebond (q), le mécanisme de butées est susceptible de comporter des moyens d'amortissement 18 spécifiques. Sur l'exemple de réalisation du mécanisme de butées représenté sur les fig.6 à fig.11, de tels moyens d'amortissement 18 sont par exemple formés d'une masse souple portée par le moyeu 3.

Sur la fig.9, le rotor est entraîné à puissance nominale, et l'effort centrifuge généré par la masselotte 10 a franchi le seuil d'effort centrifuge. Les organes de butée haute 6 sont maintenus en position de dégagement sous l'effet de l'effort centrifuge C généré par la masselotte 10. L'état des moyens de rappel 13 est à mettre en correspondance avec le seuil d'effort de rappel (SR) tel qu'illustré sur le schéma (a) de la fig.5.

Sur la fig.10, le rotor 1 est en phase d'arrêt et la force centrifuge qu'il génère induit un affaiblissement de l'effort centrifuge C. L'effort centrifuge C franchit dans un premier temps le seuil d'effort de rappel, l'organe de butée haute 6 étant néanmoins maintenu en position de dégagement. Les moyens de rappel 13 se déforment progressivement à l'encontre de l'effort centrifuge C pour reprendre leur état naturel, tel qu'illustré sur le schéma (b) de la fig.5.

Sur la fig.11, l'effort centrifuge C est insuffisant pour s'opposer au passage de l'organe de butée haute 6 vers la position d'engagement sous l'effet de l'effort de rappel R généré par les moyens de rappel 13. Les organes magnétiques 16,17 sont mis en coopération, avec pour effet d'induire la mise en prise du verrou 15 sur l'organe de butée haute 6 et son maintien ferme en position d'engagement, tel qu'illustré sur la fig.4.

## Revendications

1. Rotor (1) de giravion, équipé d'une voilure tournante comprenant une pluralité de pales (2), les pales (2) étant individuellement articulées sur un moyeu (3) du rotor (1) par l'intermédiaire d'organes de montage (4) respectifs, le rotor (1) comportant un mécanisme de butées comprenant des organes de butée (5,6) qui sont montés sur le moyeu (3) et qui coopèrent avec des organes d'appui (7,8) portés par le moyeu (3), dont des organes de butée basse (5) et des organes de butée haute (6) entre lesquels le trajet en battement individuel d'une pale (2) qui leur est affectée est limité,
-) les organes de butée haute (6) étant montés mobiles sur le moyeu (3) entre une position d'engagement dans laquelle les organes de butée haute (6) coopèrent avec des organes appui (7) correspondants en faisant obstacle au trajet en battement des pales (2) vers le haut, et une position de dégagement dans laquelle les organes de butée haute (6) sont escamotés en laissant libre le trajet des pales (2) en battement vers le haut,
-) le mécanisme de butées comprenant des moyens de manoeuvre (9,12) des organes de butée haute (6) entre la position d'engagement et la position de dégagement, les moyens de manoeuvre comprenant un premier moyen de manoeuvre (9) et un deuxième moyen de manoeuvre (12) développant des efforts antagonistes provoquant le passage des organes de butée haute (6) respectivement vers la position de dégagement et vers la position d'engagement,
-) le premier moyen de manoeuvre (9) exploitant une force centrifuge qui génère un effort centrifuge (C) provoquant le passage des organes de butée haute (6) vers la position de dégagement à partir d'un seuil d'effort centrifuge (SC) prédéterminé,
-) le deuxième moyen de manoeuvre (12) comprenant des moyens de rappel (13) qui génèrent un effort de rappel (R) spontané des organes de butée haute (6) vers la position d'engagement à l'encontre de l'effort centrifuge (C) généré par le premier moyen de manoeuvre (9), les moyens de rappel (13) provoquant le passage des organes de butée haute (6) vers la position d'engagement à partir d'un seuil d'effort de rappel (SR) prédéterminé correspondant à un affaiblissement prédéterminé de l'effort centrifuge (C) généré par le premier moyen de manoeuvre (9),
**caractérisé en ce que** le mécanisme de butées comprend au moins un verrou d'engagement (15) bistable qui est sélectivement en prise sur les organes de butée haute (6) entre un état actif du verrou d'engagement (15) dans lequel le verrou d'engagement (15) est en prise sur les organes de butée haute (6) qu'il maintient bloqués en position d'engagement, et un état inactif du verrou d'engagement (15) dans lequel ladite prise est rompue en autorisant une indépendance de mobilité des organes de butée haute (6) vis-à-vis du verrou d'engagement (15).

2. Rotor (1) de giravion selon la revendication 1,
**caractérisé en ce que** le seuil d'effort centrifuge (SC) et le seuil d'effort de rappel (SR) étant des seuils distincts préalablement définis, le seuil d'effort centrifuge est significativement supérieur à l'effort de rappel (R) intrinsèquement généré par les moyens de rappel (13) à l'encontre de l'effort centrifuge (C) généré par le premier moyen de manoeuvre (9) au seuil d'effort centrifuge (SC).

3. Rotor (1) de giravion selon l'une quelconque des revendications précédentes,
**caractérisé en ce qu'**il comprend des moyens d'inhibition du verrou d'engagement (15) provoquant son état inactif au seuil d'effort centrifuge (SC) atteint par l'effort centrifuge (C) progressivement généré par le premier moyen de manoeuvre (9).

4. Rotor (1) de giravion selon la revendication 3,
**caractérisé en ce que** les moyens d'inhibition du verrou d'engagement (15) sont formés par le premier moyen de manoeuvre (9).

5. Rotor (1) de giravion selon l'une quelconque des revendications précédentes,
**caractérisé en ce qu'**il comprend des moyens d'activation du verrou d'engagement (15) provoquant son état actif à un effort centrifuge (C) correspondant à un seuil d'effort de verrouillage prédéterminé qui est au plus égal au seuil d'effort de rappel (SR).

6. Rotor (1) de giravion selon l'une quelconque des revendications précédentes,
**caractérisé en ce que** le verrou d'engagement (15) est générateur d'un effort de retenue (V) des organes de butée haute (6) en position d'engagement à l'encontre de l'effort centrifuge (C) généré par le premier moyen de manoeuvre (9), l'effort de retenue (V) correspondant à la valeur du seuil d'effort centrifuge (SC) diminuée de l'effort de rappel (R) intrinsèquement généré par les moyens de rappel (13) au seuil d'effort centrifuge (SC).

7. Rotor (1) de giravion selon l'une quelconque des revendications précédentes,
**caractérisé en ce que** le verrou d'engagement (15) comprend des premiers moyens magnétiques associant au moins un jeu d'organes magnétiques (16,17) coopérants qui sont respectivement en prise sur les organes de butée haute (6) et sur le moyeu (7).

8. Rotor (1) de giravion selon la revendication 7,
**caractérisé en ce que** le verrou d'engagement (15) comprend au moins un aimant (16,17) développant une force magnétique permanente et intrinsèque correspondant à l'effort de retenue (V).

9. Rotor (1) de giravion selon la revendication 7,
**caractérisé en ce que** le verrou d'engagement (15) comprend un électroaimant dont la mise en oeuvre est placée sous la dépendance de moyens de commande de son activation et inversement de son inhibition, les moyens de commande étant en relation avec des moyens d'évaluation de l'effort centrifuge (C) généré par le premier moyen de manoeuvre (9) au regard du seuil d'effort centrifuge.

10. Rotor (1) de giravion selon l'une quelconque des revendications précédentes,
**caractérisé en ce que** le mécanisme de butées comprend des moyens d'amortissement (18) à l'encontre d'un phénomène de rebond (q) induit par un passage rapide des organes de butée haute (6) depuis la position d'engagement vers la position de dégagement.

11. Rotor (1) de giravion selon la revendication 10,
**caractérisé en ce que** les moyens d'amortissement (18) sont formés par des organes amortisseurs placés sur un trajet correspondant au déplacement des organes de butée haute (6) depuis la position d'engagement vers la position de dégagement.

12. Rotor (1) de giravion selon la revendication 10,
**caractérisé en ce que** les moyens d'amortissement sont intégrés aux moyens de rappel (13).

13. Rotor (1) de giravion selon l'une quelconque des revendications précédentes,
**caractérisé en ce que** le mécanisme de butées comprend au moins un verrou de dégagement bistable qui est sélectivement en prise sur les organes de butée haute (6) entre un état actif du verrou de dégagement dans lequel le verrou de dégagement est en prise sur les organes de butée haute (6) qu'il maintient bloqués en position de dégagement, et un état inactif du verrou de dégagement dans lequel ladite prise est rompue en autorisant une indépendance de mobilité des organes de butée haute (6) vis-à-vis du verrou de dégagement.

14. Rotor (1) de giravion selon l'une quelconque des revendications précédentes,
**caractérisé en ce que** les organes de butée haute (6) sont conjointement portés par un anneau (14) tournant monté coaxial sur le moyeu (3), l'anneau (14) étant en prise sélective sur le verrou (15) à l'encontre de sa mobilité en rotation à l'état actif du verrou (15).

15. Rotor de giravion selon la revendication 14,
**caractérisé en ce que** l'anneau (14) est équipé de l'un des organes magnétiques (16,17) d'au moins un dit jeu d'organes magnétiques que comprend le verrou (15), l'autre organe magnétique (16,17) du dit jeu d'organes magnétiques (16,17) étant porté par le moyeu (3).

16. Rotor de giravion selon l'une quelconque des revendications 1 à 13,
**caractérisé en ce que** les organes de butée haute (6) sont individuellement montés mobiles sur le moyeu (3) en basculement entre la position d'engagement et la position de dégagement, chacun des organes de butée haute (6) étant individuellement en prise sélective sur un verrou (15) qui leur est affecté à l'encontre de leur mobilité en rotation sur le moyeu (3) à l'état actif du verrou (15).

17. Rotor de giravion selon la revendication 16,
**caractérisé en ce que** chacun des organes de butée haute (6) est équipé de l'un des organes magnétiques (16,17) d'un dit jeu d'organes magnétiques (16,17) que comprend le verrou (15), l'autre organe magnétique (16,17) du dit jeu d'organes magnétiques (16,17) étant porté par le moyeu (3).

## Patentansprüche

1. Rotor (1) eines Drehflügelflugzeugs mit Drehflügeln, die eine Mehrzahl von Rotorblättern (2) aufweisen, wobei die Rotorblätter (2) einzeln an einer Nabe (3) des Rotors (1) über jeweilige Montageorgane (4) angelenkt sind, wobei der Rotor (1) einen Anschlagsmechanismus aufweist mit Anschlagsorganen (5, 6), die auf der Nabe (3) montiert sind und die mit Auflagerorganen (7, 8) zusammenwirken, die von der Nabe (3) getragen werden, wobei der Hub des individuellen Schlagens eines Rotorblatts (2), der diesem zugeordnet ist, durch untere Anschlagsorgane (5) und obere Anschlagorgane (6) begrenzt ist,
-) wobei die oberen Anschlagsorgane (6) beweglich auf der Nabe (3) montiert sind zwischen einer Eingriffsstellung, in der die oberen Anschlagsorgane (6) mit entsprechenden Auflagerorganen (7) zusammenwirken, indem sie den Hub des Schlagens von Rotorblättern (2) nach oben begrenzen, und einer Freigabestellung, in der die oberen Anschlagsorgane (6) eingefahren sind und die schlagende Hubbewegung der Rotorblätter (2) nach oben freigeben,
-) wobei der Anschlagsmechanismus Mittel (9, 12) zur Betätigung von oberen Anschlagsorganen (6) zwischen der Eingriffsstellung und der Freigabestellung aufweist, wobei die Betätigungsmittel ein erstes Betätigungsmittel (9) und ein zweites Betätigungsmittel (12) aufweisen, die gegenläufige Kräfte entwickeln, die den Übergang von oberen Anschlagsorganen (6) jeweils in die Freigabestellung bzw. in die Eingriffsstellung bewirken,
-) wobei das erste Betätigungsmittel (9) eine Zentrifugalkraft ausnutzt, die eine Zentrifugalkraft (C) erzeugt, die den Übergang oberer Anschlagsorgane (6) in die Freigabestellung ausgehend von einem vorbestimmten Zentrifugalkraftschwellenwert (SC) bewirkt,
-) wobei die zweiten Betätigungsmittel (12) Rückholmittel (13) umfassen, die eine spontane Kraft (R) zur Rückstellung von oberen Anschlagsorganen (6) in die Eingriffsstellung unter der Einwirkung der Zentrifugalkraft (C) erzeugen, die durch das erste Betätigungsmittel (9) erzeugt wird, wobei die Rückstellmittel (13) den Übergang von oberen Anschlagsorganen (6) in die Eingriffsstellung ab einem vorbestimmten Rückstellkraftschwellenwert (SR) bewirken, der einer vorbestimmten Abschwächung der Zentrifugalkraft (C) entspricht, die von dem ersten Betätigungsmittel (9) erzeugt wird,
**dadurch gekennzeichnet, dass** der Anschlagsmechanismus mindestens einen bistabilen Eingriffsriegel aufweist, der selektiv mit den oberen Anschlagsorganen (6) in Eingriff steht zwischen einem aktiven Zustand des Eingriffsriegels (15), in dem der Eingriffsriegel (15) mit den oberen Anschlagsorganen (6) in Eingriff steht, die er in Eingriffsstellung blockiert hält, und einem inaktiven Zustand des Eingriffsriegels (15), in dem der Eingriff unterbrochen ist, indem eine Bewegungsfreiheit der oberen Anschlagsorgane (6) gegenüber dem Eingriffsriegel (15) zugelassen wird.

2. Rotor (1) eines Drehflügelflugzeugs nach Anspruch 1,
**dadurch gekennzeichnet, dass** der Schwellenwert der Zentrifugalkraft (SC) und der Schwellenwert der Rückstellkraft (SR) verschiedene zuvor definierte Schwellenwerte sind, wobei der Schwellenwert der Zentrifugalkraft deutlich größer ist als der Schwellenwert der Rückstellkraft (R), die inhärent von den Rückstellmitteln (13) gegen die Zentrifugalkraft (C) erzeugt wird, die durch das erste Betätigungsmittel (9) bei dem Schwellenwert der Zentrifugalkraft (SC) erzeugt wird.

3. Rotor (1) eines Drehflügelflugzeugs nach einem der vorstehenden Ansprüche,
**dadurch gekennzeichnet, dass** er Mittel zur Blockierung des Eingriffsriegels (15) aufweist, die bei Erreichen des Schwellenwerts der Zentrifugalkraft (SC) durch die von dem ersten Betätigungsmittel (9) stetig erzeugte Zentrifugalkraft (C) dessen inaktiven Zustand bewirken.

4. Rotor (1) eines Drehflügelflugzeugs nach Anspruch 3,
**dadurch gekennzeichnet, dass** die Blockiermittel des Eingriffsriegels (15) durch das erste Betätigungsmittel (9) gebildet werden.

5. Rotor (1) eines Drehflügelflugzeugs nach einem der vorstehenden Ansprüche,
**dadurch gekennzeichnet, dass** er Aktivierungsmittel des Eingriffsriegels (15) aufweist, die bei einer Zentrifugalkraft (C), die einem vorbestimmten Schwellenwert der Verriegelungskraft entspricht, der höchstens gleich dem Schwellenwert der Rückstellkraft (SR) ist dessen aktiven Zustand bewirken.

6. Rotor (1) eines Drehflügelflugzeugs nach einem der vorstehenden Ansprüche,
**dadurch gekennzeichnet, dass** der Eingriffsriegel (15) eine Rückhaltekraft (V) der oberen Anschlagsorgane (6) in der Eingriffsstellung erzeugt entgegen der Zentrifugalkraft (C), die durch das erste Betätigungsmittel (9) erzeugt wird, wobei die Rückhaltekraft (V) dem Schwellenwert der Zentrifugalkraft (SC) vermindert um die Rückstellkraft (R), die inhärent bei dem Schwellenwert der Zentrifugalkraft (SC) durch die Rückstellmittel (13) erzeugt wird, entspricht.

7. Rotor (1) eines Drehflügelflugzeugs nach einem der vorstehenden Ansprüche,
**dadurch gekennzeichnet, dass** der Eingriffsriegel (15) erste magnetische Mittel aufweist, die mindestens ein zusammenwirkendes Paar magnetischer Organe (16, 17) verbinden, die jeweils in Eingriff mit den oberen Anschlagsorganen (6) und der Nabe (7) stehen.

8. Rotor (1) eines Drehflügelflugzeugs nach Anspruch 7,
**dadurch gekennzeichnet, dass** der Eingriffsriegel (15) mindestens einen Magneten (16, 17) aufweist, der permanente und inhärente magnetische Kraft entwickelt, die einer Rückhaltekraft (V) entspricht.

9. Rotor (1) eines Drehflügelflugzeugs nach Anspruch 7,
**dadurch gekennzeichnet, dass** der Eingriffsriegel (15) einen Elektromagneten aufweist, dessen Betätigung von Mitteln zur Steuerung seiner Aktivierung und umgekehrt seiner Desaktivierung gesteuert wird, wobei die Steuermittel mit Mitteln zur Erfassung der Zentrifugalkraft (C) in Verbindung stehen, die durch das erste Betätigungsmittel (9) bei dem Zentrifugalkraftschwellenwert erzeugt wird.

10. Rotor (1) eines Drehflügelflugzeugs nach einem der vorstehenden Ansprüche,
**dadurch gekennzeichnet, dass** der Anschlagsmechanismus Dämpfermittel (18) gegenüber einem Rückprallphänomen (q) aufweist, das hervorgerufen wird durch einen schnellen Übergang der oberen Anschlagsorgane (6) von der Eingriffsstellung in die Freigabestellung.

11. Rotor (1) eines Drehflügelflugzeugs nach Anspruch 10,
**dadurch gekennzeichnet, dass** die Dämpfungsmittel (18) aus Dämpferelementen geformt sind, die auf dem entsprechenden Hubweg der Bewegung der oberen Anschlagsorgane (6) aus der Eingriffsstellung in die Freigabestellung angeordnet sind.

12. Rotor (1) eines Drehflügelflugzeugs nach Anspruch 10,
**dadurch gekennzeichnet, dass** die Dämpfungsmittel in die Rückstellmittel (13) integriert sind.

13. Rotor (1) eines Drehflügelflugzeugs nach einem der vorstehenden Ansprüche,
**dadurch gekennzeichnet, dass** der Anschlagsmechanismus mindestens einen bistabilen Freigaberiegel aufweist, der selektiv in Eingriff mit den oberen Anschlagsorganen (6) steht zwischen einem aktiven Zustand des Freigaberiegels, in dem der Freigaberiegel in Eingriff mit den oberen Anschlagsorganen (6) steht, die er in der Freigabestellung blockiert hält, und einem inaktiven Zustand des Freigaberiegels, in dem der Eingriff unterbrochen ist, indem eine Bewegungsfreiheit der oberen Anschlagsorgane (6) gegenüber dem Freigaberiegel erlaubt wird.

14. Rotor (1) eines Drehflügelflugzeugs nach einem der vorstehenden Ansprüche,
**dadurch gekennzeichnet, dass** die oberen Anschlagsorgane (6) gemeinsam von einem drehbaren Ring (14) getragen werden, der koaaxial auf der Nabe (3) montiert ist, wobei der Ring (14) in selektivem Eingriff mit dem Riegel (15) entgegen dessen Drehbeweglichkeit im aktiven Zustand des Riegels (15) steht.

15. Rotor eines Drehflügelflugzeugs nach Anspruch 14,
**dadurch gekennzeichnet, dass** der Ring (14) mit mindestens einem der magnetischen Organe (16, 17) des Paars magnetischer Organe, die der Riegel (15) aufweist, ausgerüstet ist, wobei das andere magnetische Organ (16, 17) des Paars magnetischer Organe (16, 17) von der Nabe (3) getragen wird.

16. Rotor eines Drehflügelflugzeugs nach einem der Ansprüche 1 bis 13,
**dadurch gekennzeichnet, dass** die oberen Anschlagsorgane (6) einzeln beweglich auf der Nabe (3) montiert sind, wobei sie zwischen der Eingriffsstellung und der Freigabestellung pendeln, wobei jedes der oberen Anschlagsorgane (6) einzeln in selektivem Eingriff mit einem Riegel (15), der ihm zugeordnet ist, steht, entgegen seiner Drehbeweglichkeit auf der Nabe (3) im aktiven Zustand des Riegels (15).

17. Rotor eines Drehflügelflugzeugs nach Anspruch 16,
**dadurch gekennzeichnet, dass** jedes der oberen Anschlagsorgane (6) mit einem magnetischen Organ (16, 17) eines Paars magnetischer Organe (16, 17), die der Riegel (15) aufweist, ausgerüstet ist, wobei das andere magnetische Organ (16, 17) des Paars magnetischer Organe (16, 17) von der Nabe (3) getragen wird.

## Claims

1. A rotorcraft rotor (1), equipped with a rotary wing comprising a plurality of blades (2), the blades (2) being individually articulated on a hub (3) of the rotor (1) by means of respective mounting members (4), the rotor (1) comprising an abutment mechanism comprising abutment members (5, 6) which are mounted on the hub (3) and which cooperate with contact members (7, 8) borne by the hub (3), comprising lower abutment members (5) and upper abutment members (6) between which the individual flapping path of a blade (2) which is associated therewith is limited,
-) the upper abutment members (6) being mounted mobilely on the hub (3) between an engagement position in which the upper abutment members (6) cooperate with corresponding contact members (7), forming an obstacle to the upward flapping path of the blades (2), and a disengagement position in which the upper abutment members (6) are retracted, leaving the upward flapping path of the blades (2) free,
-) the abutment mechanism comprising means (9,12) for manoeuvring the upper abutment members (6) between the engagement position and the disengagement position, the means for manoeuvring comprising a first manoeuvring means (9) and a second manoeuvring means (12) which develop opposing forces which cause the upper abutment members (6) to pass towards the disengagement position and towards the engagement position, respectively,
-) the first manoeuvring means (9) making use of a centrifugal force which generates a centrifugal force (C) which causes the upper abutment members (6) to pass towards the disengagement position as from a predetermined centrifugal force threshold (SC),
-) the second manoeuvring means (12) comprising return means (13) which generate a spontaneous return force (R) for returning the upper abutment members (6) towards the engagement position counter to the centrifugal force (C) generated by the first manoeuvring means (9), the return means (13) causing the upper abutment members (6) to pass towards the engagement position as from a predetermined return force threshold (SR) corresponding to a predetermined weakening of the centrifugal force (C) generated by the first manoeuvring means (9),
**characterised in that** the abutment mechanism comprises at least one bistable engagement latch (15) which is selectively engaged on the upper abutment members (6) between an active state of the engagement latch (15), in which the engagement latch (15) is engaged on the upper abutment members (6) which it keeps blocked in the engagement position, and an inactive state of the engagement latch (15) in which said engagement is broken, allowing independent mobility of the upper abutment members (6) with respect to the engagement latch (15).

2. A rotorcraft rotor (1) according to Claim 1,
**characterised in that**, the centrifugal force threshold (SC) and the return force threshold (SR) being previously defined distinct thresholds, the centrifugal force threshold is significantly greater than the return force (R) intrinsically generated by the return means (13) counter to the centrifugal force (C) generated by the first manoeuvring means (9) at the centrifugal force threshold (SC).

3. A rotorcraft rotor (1) according to any one of the preceding claims,
**characterised in that** it comprises means for inhibiting the engagement latch (15) which bring about its inactive state at the centrifugal force threshold (SC) reached by the centrifugal force (C) progressively generated by the first manoeuvring means (9).

4. A rotorcraft rotor (1) according to Claim 3,
**characterised in that** the means for inhibiting the engagement latch (15) are formed by the first manoeuvring means (9).

5. A rotorcraft rotor (1) according to any one of the preceding claims,
**characterised in that** it comprises means for activating the engagement latch (15) which bring about its active state at a centrifugal force (C) corresponding to a predetermined latching stress threshold which is at most equal to the return force threshold (SR).

6. A rotorcraft rotor (1) according to any one of the preceding claims,
**characterised in that** the engagement latch (15) generates a retaining force (V) for retaining the upper abutment members (6) in the engagement position counter to the centrifugal force (C) generated by the first manoeuvring means (9), the retaining force (V) corresponding to the value of the centrifugal force threshold (SC) minus the return force (R) intrinsically generated by the return means (13) at the centrifugal force threshold (SC).

7. A rotorcraft rotor (1) according to any one of the preceding claims,
**characterised in that** the engagement latch (15) comprises first magnetic means associating at least one set of cooperating magnetic members (16, 17) which are engaged on the upper abutment members (6) and with the hub (7) respectively.

8. A rotorcraft rotor (1) according to Claim 7,
**characterised in that** the engagement latch (15) comprises at least one magnet (16, 17) which develops a permanent, intrinsic magnetic force corresponding to the retaining force (V).

9. A rotorcraft rotor (1) according to Claim 7,
**characterised in that** the engagement latch (15) comprises an electromagnet, the operation of which is under the control of control means for controlling its activation and conversely its inhibition, the control means being in communication with means for evaluating the centrifugal force (C) generated by the first manoeuvring means (9) with regard to the centrifugal force threshold.

10. A rotorcraft rotor (1) according to any one of the preceding claims,
**characterised in that** the abutment mechanism comprises damping means (18) for countering a rebound phenomenon (q) which is induced by the upper abutment members (6) passing rapidly from the engagement position towards the disengagement position.

11. A rotorcraft rotor (1) according to Claim 10,
**characterised in that** the damping means (18) are formed by damping members placed on a path corresponding to the displacement of the upper abutment members (6) from the engagement position towards the disengagement position.

12. A rotorcraft rotor (1) according to Claim 10,
**characterised in that** the damping means are integrated in the return means (13).

13. A rotorcraft rotor (1) according to any one of the preceding claims,
**characterised in that** the abutment mechanism comprises at least one bistable disengagement latch which is selectively engaged on the upper abutment members (6) between an active state of the disengagement latch, in which the disengagement latch is engaged on the upper abutment members (6) which it keeps blocked in the disengagement position, and an inactive state of the disengagement latch in which said engagement is broken, permitting independent mobility of the upper abutment members (6) with respect to the disengagement latch.

14. A rotorcraft rotor (1) according to any one of the preceding claims,
**characterised in that** the upper abutment members (6) are jointly borne by a rotary ring (14) mounted coaxially on the hub (3), the ring (14) being selectively engaged on the latch (15) counter to its ability to move in rotation in the active state of the latch (15).

15. A rotorcraft rotor according to Claim 14,
**characterised in that** the ring (14) is equipped with one of the magnetic members (16, 17) of at least one said set of magnetic members making up the latch (15), the other magnetic member (16, 17) of said set of magnetic members (16, 17) being borne by the hub (3).

16. A rotorcraft rotor according to any one of Claims 1 to 13,
**characterised in that** the upper abutment members (6) are individually mounted mobilely on the hub (3) to tilt between the engagement position and the disengagement position, each of the upper abutment members (6) being individually engaged selectively with a latch (15) which is associated therewith counter to their ability to move in rotation on the hub (3) in the active state of the latch (15).

17. A rotorcraft rotor according to Claim 16,
**characterised in that** each of the upper abutment members (6) is equipped with one of the magnetic members (16, 17) of one said set of magnetic members (16, 17) making up the latch (15), the other magnetic member (16, 17) of said set of magnetic members (16, 17) being borne by the hub (3).
